# NEUE EUROPÄISCHE PATENTSCHRIFT

(11) **EP 3 950 618 B2**
(45) Veröffentlichungstag und Bekanntmachung des Hinweises auf die Entscheidung über den Einspruch: **07.10.2026**
(45) Hinweis auf die Patenterteilung: 10.01.2024
(21) Anmeldenummer: 21198535.3
(22) Anmeldetag: 18.12.2018
(51) Int. Cl.: C03C 3/097, C03C 3/085, C03C 4/02, C03C 4/10, C03C 10/00, C03C 17/22, C03C 3/087, C03C 17/23

(54) **EINRICHTUNGS- UND AUSSTATTUNGSGEGENSTÄNDE FÜR KÜCHEN ODER LABORE MIT LEUCHTELEMENT**
SETUP AND EQUIPMENT OBJECTS FOR KITCHENS OR LABORATORY WITH LIGHTING ELEMENT
OBJETS D'ÉQUIPEMENT ET DE DÉCORATION POUR CUISINES OU LABORATOIRES POURVUS D'ÉLÉMENTS LUMINEUX

(30) Priorität: 22.12.2017 DE 102017131113; 07.05.2018 DE 102018110910
(43) Veröffentlichungstag der Anmeldung: 09.02.2022
(62) Dokumentnummer(n) der früheren Anmeldung(en) nach Art. 76 EPÜ: 18213707.5 / 3 502 073
(73) Patentinhaber: SCHOTT AG, 55122 Mainz (DE)
(72) Erfinder: WEISS, Evelin, 55131 Mainz (DE); BOCKMEYER, Matthias, 55124 Mainz (DE); DOERK, Birgit, 55128 Mainz (DE); SIEBERS, Friedrich, 55283 Nierstein (DE); HENN, Christian, 55546 Frei-Laubersheim (DE)
(74) Vertreter: WSL Patentanwälte Partnerschaft mbB

(56) Entgegenhaltungen:
- WO-A1-2012/001300
- WO-A1-2012/172257
- WO-A1-2014/068242
- DE-A1- 102008 050 263
- DE-A1- 102009 013 127
- DE-U1- 202011 110 029
- DE-U1- 202011 110 029
- DE-U1- 202016 007 247
- FR-A1- 2 405 906
- FR-A1- 2 992 311
- US-A- 4 526 872
- US-A- 5 010 041
- US-A- 5 179 045
- US-A- 5 204 293
- US-A- 5 256 600
- US-A1- 2012 067 865
- US-A1- 2017 050 880
- US-A1- 2017 290 086

## Beschreibung

Die Erfindung betrifft Einrichtungs- oder Ausstattungsgegenstände für Küchen oder Labore mit einem thermisch stabilen Glaskeramiksubstrat und einem Leuchtelement.

In Einrichtungs- und Ausstattungsgegenständen für Küchen und Laboren kommen Scheiben aus Glas oder Glaskeramik in vielfältiger Weise zum Einsatz. Je nach Anforderungen beispielsweise an die chemische oder thermische Beständigkeit oder die optischen Eigenschaften werden hierfür unterschiedliche Gläser oder Glaskeramiken ausgewählt.

So finden sich beispielsweise Scheiben aus Glas oder Glaskeramik als Sichtfenster in Türen von Öfen, Kühlschränken und Mikrowellengeräten, als Abdeckscheibe von Bedienelementen von Kochgeräten und Kaffeemaschinen, als Arbeitsplatte eines Küchenschranks oder Labormöbels, sowohl im privaten als auch im professionellen Umfeld.

Immer häufiger weisen solche Gegenstände zusätzlich ein Leuchtelement auf, das beispielsweise zur Darstellung eines Betriebszustandes oder zur dekorativen Beleuchtung vorgesehen ist.

Die technische Herausforderung bei der Verwendung von Leuchtelementen in Einrichtungs- und Ausstattungsgegenständen mit Scheiben aus Glas oder Glaskeramik ist dabei, dass zum einen das von den Leuchtelementen ausgesendete Licht von einem Benutzer des Gegenstandes gut wahrnehmbar sein soll aber andererseits der Blick des Benutzers auf den Innenbereich (4) des Gegenstandes verdeckt sein soll. Es besteht also ein Zielkonflikt an die Anforderungen der Transmissionseigenschaften des Glases oder der Glaskeramik, die einerseits möglichst hoch, andererseits möglichst niedrig sein soll.

Ein einfacher aus dem Stand der Technik bekannter Lösungsansatz hierfür ist, ein transparentes, nicht eingefärbtes Glas oder eine transparente nicht eingefärbte Glaskeramik mit einer blickdichten Beschichtung zu versehen und diese in den Bereichen, in denen Licht transmittiert werden soll, ausspart. Solche Aussparungen sind jedoch auch dann gut sichtbar, wenn das jeweilige Leuchtelement ausgeschaltet ist, was aus ästhetischen Gründen als störend empfunden wird.

Unter einem eingefärbten Material, gleich welcher Art, wird dabei jedes Material verstanden, dass aufgrund seiner Zusammensetzung transmittiertes Licht derart absorbiert, dass es einen Lichttransmissionsgrad von höchstens 80 % aufweist. Eingefärbte Materialien enthalten also in ihrer Zusammensetzung färbende beziehungsweise absorbierende Bestandteile. Dabei kann es sich beispielsweise um Farbstoffe, Pigmente oder andere färbende chemische Verbindungen handeln. Im Unterschied dazu, werden Materialien nicht als eingefärbt verstanden, die als solche einen Lichttransmissionsgrad von mehr als 80 % aufweisen, aber auf ihrer Oberfläche eine farbgebende, beispielsweise eine eingefärbte, Beschichtung aufweisen.

Ein anderer Lösungsansatz ist, dunkel eingefärbte Gläser oder Glaskeramiken zu verwenden. Eingefärbte Glaskeramiken für Kochflächen beispielsweise enthalten in der Regel Vanadium-Ionen zur Farbgebung, da diese die besondere Eigenschaft besitzen, im Bereich des sichtbaren Lichts zu absorbieren und im Bereich der Infrarotstrahlung eine hohe Transmission zu erlauben. Eine solche Färbung mittels V₂O₅ ist beispielsweise aus der DE 10 2008 050 263 A1 bekannt. In Verbindung mit Leuchtelementen tritt bei solchen eingefärbten Glaskeramiken das Problem auf, dass die Transmissionscharakteristik im sichtbaren Spektralbereich derart ist, dass es zu einer Verfälschung der von der Anzeigeeinrichtung dargestellten Farben durch die Glaskeramik kommt. Eine Möglichkeit zur Korrektur dieser unerwünschten Farbverschiebung ist das Anbringen eines Farbkompensationsfilters, was jedoch mit zusätzlichem Aufwand verbunden ist. Solche Farbkompensationsfilter sind aus der DE 10 2011 050 873 A1 bekannt.

Ähnliches gilt auch für transparente, nicht eingefärbte Glaskeramiken mit einer lichtdurchlässigen Beschichtung. Aus der GB 2430249 B ist beispielsweise eine gesputterte Unterseitenbeschichtung für ein Glaskeramik-Kochfeld offenbart, die im roten Spektralbereich eine höhere Transmission aufweist als im blauen oder grünen und sich somit ähnlich verhält, wie eine eingefärbte Glaskeramik. Bei einer solchen Beschichtung besteht ebenfalls die Möglichkeit einen zusätzlichen Farbkompensationsfilter anzubringen.

Darüber hinaus sind von optischen Anwendungen auch beschichtete oder eingefärbte Gläser bekannt, die spezifisch dafür optimiert sind, den Farbort von durch sie hindurchtretendem Licht nicht zu verschieben. Solche, auch als Neutraldichtefilter beziehungsweise Graugläser bekannten Systeme sind aufgrund mangelhafter thermischer beziehungsweise chemischer Beständigkeit nicht für den Einsatz in Küchen oder Laboren geeignet. Insbesondere verspiegelte Neutraldichtefilter sind allgemein für den Einsatz in Küchen oder Laboren nicht geeignet, da sie schon leichte Verschmutzungen und Kratzer deutlich erkennen lassen und deshalb aufwändig zu reinigen sind. Im Speziellen weisen Neutraldichtefilter und Graugläser nicht die für einen Einsatz in Kochgeräten notwendige Transparenz im infraroten Spektralbereich auf.

Die Dokumente DE 20 2011 110029 U1 und DE 10 2009 013127 A1 beschreiben Einrichtungs- oder Austattungselemente umfassend mindestens einem Leuchtelement und einem Glas oder einer Glaskeramik.

Eine Aufgabe der Erfindung ist es, einen Einrichtungs- oder Ausstattungsgegenstand für eine Küche oder ein Labor mit einem Leuchtelement bereitzustellen, der die im Stand der Technik vorhandenen Nachteile überwindet oder zumindest verbessert.

Diese Aufgabe wird gelöst durch einen Einrichtungs- oder Ausstattungsgegenstand für eine Küche oder ein Labor gemäß Anspruch 1. Vorteilhafte Ausführungsformen sind in den abhängigen Ansprüchen aufgeführt. Ein solcher Einrichtungs- oder Ausstattungsgegenstand für eine Küche oder ein Labor umfasst ein Leuchtelement und ein Trennelement, wobei das Trennelement zumindest abschnittsweise einen Innenbereich des Gegenstandes von einem Außenbereich abtrennt und ein Glaskeramiksubstrat mit einem thermischen Ausdehnungskoeffizienten von -2,5 und 2,5 × 10-6/K im Temperaturbereich zwischen 20 °C und 300 °C umfasst. Das Leuchtelement ist dabei im Innenbereich des Gegenstandes so angeordnet, dass das von dem Leuchtelement ausgesandte Licht durch das Trennelement hindurchtritt und von einem Benutzer im Außenbereich des Gegenstandes wahrnehmbar ist. Das Trennelement weist im Bereich des Leuchtelements, also in dem Bereich in dem das von dem Leuchtelement ausgesandte Licht durch das Trennelement hindurchtreten soll, einen Lichttransmissionsgrad von wenigstens 0,1 % und von weniger als 12 % auf. Weiterhin weist das Trennelement einen Farbort im CIELAB-Farbraum mit den Koordinaten L* von 20 bis 40, a* von -6 bis 6 und b* von -6 bis 6, gemessen in Remission mit Licht der Normlichtart D65 gegen eine Schwarzfalle auf. Zuletzt ist das Trennelement wie auch die Glaskeramik als solche dadurch gekennzeichnet, dass der Farbort von Licht der Normlichtart D65 sowohl nach Durchtritt durch das Trennelement als auch nach Durchtritt durch das Glaskeramiksubstrat innerhalb eines Weißbereichs W1 liegt, der im Chromatizitätsdiagramm CIExyY-2° durch die folgenden Koordinaten bestimmt ist:

| **Weißbereich W1** | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Unter einem Einrichtungs- oder Ausstattungsgegenstand für eine Küche oder ein Labor ist im Sinne der vorliegenden Erfindung allgemein ein Küchen- oder Labormöbel oder ein vorzugsweise elektrische betriebenes Küchen- oder Laborgerät zu verstehen, unabhängig von der konkreten Bauform. Zu Küchen- oder Labormöbeln zählen dabei insbesondere Schränke und Tische, die auf Ihrer Oberseite eine Arbeitsplatte aufweisen. Küchengeräte wie Kochgeräte, Kühlschränke, Mikrowellengeräte, Grills, Backöfen, Dampfgarer, Toaster oder Abzugshauben können dabei sowohl für den privaten als auch für den professionellen Bereich ausgelegt sein. Ebenso kann der Gegenstand ein separat angeordnetes Bedienfeld sein, über das ein Benutzer ein oder mehrere damit ansteuerbare Geräte bedienen kann. Erfindungsgemäße Geräte können beispielsweise in Küchen- oder Labormöbel integrierbar sein oder frei im Raum stehen. Zu den Laborgeräten zählen unter anderem auch Öfen, Klimaschränke, Kühlschränke oder Heizplatten.

Ein erfindungsgemäßer Gegenstand weist wenigstens ein Leuchtelement auf. Solche Leuchtelemente können beispielsweise LEDs, OLEDs, Laserdioden, Halogenlampen oder Leuchtstoffröhren zur Erzeugung des Lichts sowie geeignete Mittel zur Formung und Abstrahlung des Lichts wie Spiegel, Linsen, räumliche Modulatoren für Licht (SLM), Lichtleiter oder ähnliches aufweisen. Insbesondere zählen zu den geeigneten Leuchtelementen beispielsweise weiße, rote, blaue, grüne oder RGB-LEDs oder weiße, rote, blaue, grüne oder RGB-Siebensegmentanzeigen. Bevorzugt weist das Leuchtelement im sichtbaren Spektralbereich wenigstens zwei Intensitätsmaxima auf, also bei zwei unterschiedlichen Wellenlängen lokale Maxima des Emissionsspektrums. Dies ist beispielsweise bei weißen und RGB-LEDs oder weißen OLEDs der Fall, auch wenn sie als Siebensegmentanzeigen ausgeführt sind.

Leuchtelemente können insbesondere auch im Heißbereich in der Nähe von Heizelementen angeordnet sein. Hierbei ist insbesondere für die Erzeugung von weißen Leuchterscheinungen im Außenbereich des Gegenstandes von Vorteil, dass keine temperaturempfindlichen Schwarzkörperkompensationsfilter benötigt werden.

Vorzugsweise kann das Leuchtelement als rotes Anzeigeelement ausführt sein. Insbesondere kann es als rote Segmentanzeige oder rote TFT-Anzeige ausgeführt sein. Rote TFT-Anzeigen können beispielsweise als LCD-Anzeige mit roter Hintergrundbeleuchtung oder als rote OLED-Anzeige ausgeführt sein.

Weiterhin umfasst ein erfindungsgemäßer Gegenstand ein Trennelement, das zumindest Abschnittsweise einen Innenbereich des Gegenstandes von einem Außenbereich abtrennt und dass ein Glaskeramiksubstrat umfasst.

Im Falle eins Küchen- oder Laborgeräts kann das Trennelement also zumindest einen Teil des Gehäuses oder gegebenenfalls einer Tür des Geräts darstellen. Ein Beispiel hierfür ist eine Kochplatte, die den Innenbereich eines Kochfeldes, in dem außer einer Anzeigeeinrichtung beispielsweise Heizelemente vorhanden sind, von dessen Außenbereich, in dem sich der Benutzer des Kochfeldes aufhält, abtrennt. Ebenso stellen Sichtfenster in Backofen- oder Mikrowellentüren erfindungsgemäße Trennelemente dar. In Küchen- oder Labormöbeln können solche Trennelemente zumindest einen Teil des Korpus des Möbels oder der Front einer Tür oder Schublade darstellen. Besonders bevorzugt ist das Trennelement ein Teil oder sogar die gesamte Arbeitsplatte eines Küchen- oder Labormöbels.

Für jegliche Form von Einrichtungs- und Ausstattungsgegenständen für Küchen und Labore sind die Temperaturwechselbeständigkeit und die Chemikalienbeständigkeit besonders wichtige Parameter. Insbesondere für Teile von Geräten bei deren Verwendung hohe Temperaturen entstehen wie Kochfelder, Heizplatten, Öfen, Backöfen mit Pyroloysefunktion, Mikrowellen oder Grills gelten hierfür besonders hohe Anforderungen. Aber auch praktisch alle anderen Bereich eine Küche oder eines Labors müssen temperaturstabil sein, da immer die Gefahr besteht, dass sie mit heißen oder sehr kalten Gegenständen oder Flüssigkeiten in Kontakt kommen. Bei einem solchen Kontakt verändert sich die Temperatur in einem lokal begrenzten Bereich sehr schnell, was zu Spannungen im Werkstoff führt, die insbesondere bei sprödbrüchigen Werkstoffen wie Glas und Glaskeramik schnell zur Zerstörung führen können.

Am effektivsten kann eine sehr gute thermische Temperaturbeständigkeit erreicht werden, indem das Glaskeramiksubstrat einen linearen thermischen Ausdehnungskoeffizienten CTE, gemäß ISO 7991, zwischen -2,5 und höchstens 2,5 × 10-6/K, bevorzugt zwischen -1,5 × 10-6/K und höchstens 1,5 × 10-6/K, im Temperaturbereich zwischen 20 °C und 300 °C, bevorzugt zwischen 20 °C und 700 °C, aufweist. Insbesondere bei Glaskeramiken kann der CTE in diesem Temperaturbereich auch negative Werte annehmen. Bei einem derart niedrigen thermischen Ausdehnungskoeffizienten führen auch große Temperaturgradient nicht zum Aufbau von Spannungen im Substrat. Dieser Wert wird beispielsweise von Lithium-Aluminium-Silikat-Glaskeramiken (LAS-Glaskeramiken), z.B. der Marke CERANO der Firma SCHOTT AG erreicht.

Je höher der Betrag des CTE der Glaskeramik ist und je größer die bei Verwendung möglicherweise auftretenden Temperaturgradienten sein können, desto höher ist das Risiko von spannungsinduzierten Brüchen. Dem kann entgegengewirkt werden, in dem die Glaskeramik thermisch oder chemisch vorgespannt wird. Durch eine solche Vorspannung entsteht an der Oberfläche des Glases eine Druckspannung, die der thermischen Spannung entgegenwirkt.

Von ebenso großer Bedeutung wie die thermische Beständigkeit ist die chemische Beständigkeit des Glaskeramiksubstrats gegenüber Säuren und Laugen. In Laboren ist dies wegen des Umgangs mit Chemikalien allgemein vorteilhaft, in Küchen ist insbesondere die Resistenz gegenüber Reinigungsmitteln und Lebensmittelbestandteilen wichtig. Insbesondere Gläser mit hohen Anteilen von mehr als 10 Gewichtsprozent auf Oxidbasis an Alkali- oder Erdalkalimetallen, wie beispielsweise Kalk-Natron-Glas, sind deshalb nicht für erfindungsgemäße Gegenstände geeignet.

Das Trennelement weist im Bereich des Leuchtelements, also in dem Bereich in dem das von dem Leuchtelement ausgesandte Licht durch das Trennelement hindurchtreten soll, einen Lichttransmissionsgrad von wenigstens 0,1 % und von weniger als 12 % auf. Vorzugsweise weist das Trennelement im Bereich des Leuchtelements einen Lichttransmissionsgrad von wenigstens 0,5 %, bevorzugt wenigstens 0,9 %, besonders bevorzugt wenigstens 1 %, insbesondere wenigstens 2 % oder sogar wenigstens 3 % auf. Weiterhin weist es vorzugsweise einen Lichttransmissionsgrad von weniger als 9 %, bevorzugt weniger als 7 %, besonders bevorzugt weniger als 5 %, insbesondere weniger als 4 % oder sogar weniger als 3 % auf. Der Lichttransmissionsgrad kann also Beispielsweise in wenigstens einem der Bereiche 0,1 % bis 5,0 %, 0,5 % bis 3,0 %, 0,9 % bis 2,0 %, 1 % bis 9%, 2% bis 7 % oder 3 % bis 4 % liegen.

In diesem Transmissionsbereich kann ausreichend Licht eines Leuchtelements durch das Trennelement hindurchtreten wobei gleichzeitig der ein Einblick in den Innenbereich des Gegenstandes verdeckt wird. Bei Lichttransmissionsgraden ab etwa 2 % kann es vorteilhaft sein, zusätzlich ein Mittel zur Reduzierung der Gesamttransmission zwischen Trennelement und Leuchtelement anzuordnen.

Ein solches Mittel ist auf der dem Innenbereich zugewandten Seite angeordnet, damit es vor äußeren Einflüssen, insbesondere Beschädigungen durch mechanische Belastungen, geschützt ist. Bei einem solchen Mittel kann es sich um eine Beschichtung auf dem Glaskeramiksubstrat, eine Folie, ein selbsttragendes Trägermaterial wie beispielsweise eine Scheibe oder Folie aus Glas, Kunststoff oder Isolationsmaterialien, die Schichtsilikate (Glimmer) wie Mica oder Faserstoffe enthalten, handeln. Zur Erzielung der gewünschten Lichttransmission können auch mehrere dieser Mittel kombiniert werden. Beispielsweise können dafür mehrere Beschichtungen oder beschichtete Folien oder Trägermaterialien verwendet werden.

Es ist vorteilhaft, den Lichttransmissionsgrad eines solchen Mittels an den des Trennelements anzupassen. Je höher der Lichttransmissionsgrad des Trennelements ist, desto niedriger wird vorteilhafterweise der Lichttransmissionsgrad des Mittels zur Reduzierung der Gesamttransmission gewählt. Es ist besonders vorteilhaft die Gesamttransmission von Trennelement und Abdeckmittel auf einen Wert von 2 % oder weniger einzustellen.

Mittel zur Reduzierung der Gesamttransmission in Form von Beschichtungen können beispielsweise auf Basis von Email, Sol-Gel-Materialien oder eingefärbten Silikonen hergestellt werden. Email-basierte Beschichtungen, die für Küchengeräte geeignet sind, sind beispielsweise aus der DE 10 2015 103 461 A1 bekannt. Dort ist unter anderem offenbart, dass durch Verwendung eines auf dem LAS-Materialsystem basierenden Glasflusses unter Zusatz von Spinellbasierten Pigmenten wie z.B. Co(Cr,Fe)2O4 oder (Mn,Fe)2O3, Farborte wie L* = 25, a* = 0 und b* = -0,5 oder L* = 27, a* = 2 und b* = 1 erzielt werden können. Die Pigmente und deren Menge in der Beschichtungszusammensetzung können so ausgewählt werden, dass bei der vorgesehenen Schichtdicke der Beschichtung der Lichttransmissionsgrad beispielsweise kleiner als 15 % ist. Gegebenenfalls kann der Lichttransmissionsgrad auch durch mehrlagige Beschichtung reduziert werden.

In der DE 10 2008 031 428 A1 werden für Küchengeräte geeignete Beschichtungen auf Sol-Gel-Basis offenbart, deren Farbort im Bereich 30<L*<85, -8<a*<8 und -8 < b* < 8 eingestellt werden kann. Hierfür wird eine Mischung aus Tetraethoxyorthosilan (TEOS) und Triethoxymethylsilan (TEMS) hergestellt, wobei Alkohol als Lösungsmittel zugegeben werden kann. Eine wässrige Metalloxid-Dispersion, insbesondere eine SiO2-Dispersion in Form kolloiddisperser SiO₂-Partikel, wird mit Säure, vorzugsweise Salzsäure gemischt. Die beiden getrennt hergestellten Mischungen können für eine verbesserte Homogenisierung gerührt werden. Anschließend werden die beiden Mischungen zusammengegeben und vermischt. Vorteilhafterweise lässt man diese Mischung, vorzugsweise unter ständigem Rühren, für beispielsweise eine Stunde reifen. Parallel zum Ansatz dieser Mischung können Pigmente und optional weitere Füllstoffe, bevorzugt pyrogene Kieselsäure, abgewogen, der reifenden Mischung zugegeben und dispergiert werden. Für schwarze Schichten wird eine Pigmentmischung mit 67 Gew.-% beschichteten plättchenförmigen Pigmenten und 33 Gew.-% feinpulvrigem Graphit verwendet.

Der Lichttransmissionsgrad wird im Wellenlängenbereich 380 nm bis 780 nm unter Verwendung von Licht der Normlichtart D65 gemäß DIN EN 410 bestimmt. Der Lichttransmissionsgrad ist identisch mit der Helligkeit Y im CIExyY-2° Farbraum.

In einer bevorzugten Ausführungsform weist das Trennmittel eine Transmission bei einer Wellenlänge von 630 nm von wenigstens 2 %, bevorzugt wenigstens 4 % und besonders bevorzugt von wenigstens 10 % auf.

In einer weiteren bevorzugten Ausführungsform beträgt die Transmission bei einer Wellenlänge von 470 nm wenigstens 1 %, vorzugsweise wenigstens 2 %, besonders bevorzugt wenigstens 4 %.

In einer bevorzugten Ausführungsform der Erfindung umfasst das Trennelement mindestens eine im Innenbereich zwischen Substrat und Leuchtelement angeordnete Streu- oder Diffusorschicht, vorzugsweise mit mindestens einer Abdeckschicht zwischen Substrat und Leuchtelement sowie mit mindestens einer Aussparung in der Abdeckschicht.

Streu- und Diffusorschichten können optional auch eingefärbt ausgeführt sein. Eingefärbte Streu- und Diffusorschichten können gleichzeitig als Diffusor und als optischer Filter fungieren.

Solche Streu- oder Diffusorschichten können beispielsweise 1 bis 15 µm dick sein. Sie können nicht-eingefärbte Streupartikel, beispielsweise aus TiO₂, SiO₂, Al₂O₃, ZrO₂ oder anderen Metalloxiden enthalten. Die mittlere Größe solcher Partikel kann kleiner als 1 µm sein. Vorzugsweise weisen die Streu- oder Diffusorschichten eine hohe Homogenität der erzeugten Leuchtdichte, eine niedrige Körnigkeit und eine hohe Helligkeit auf. Hierdurch kommt es zu einer für den Benutzer sehr angenehmen Wahrnehmung eines sehr homogen ausgeleuchteten Bereichs.

Das Trennelement weist einen Farbort im CIELAB-Farbraum mit den Koordinaten L* von 20 bis 40, a* von -6 bis 6 und b* von -6 bis 6, gemessen in Remission mit Licht der Normlichtart D65 gegen eine Schwarzfalle auf. Bevorzugt weist das Trennelement einen Farbort im CIELAB-Farbraum mit L* kleiner oder gleich 35, besonders bevorzugt kleiner oder gleich 30, ganz besonders bevorzugt kleiner oder gleich 28 und größer oder gleich 22, bevorzugt größer oder gleich 25, mit a* von -4 bis +4 bevorzugt von -2 bis 2, besonders bevorzugt von -1 bis 1, und mit b* von -4 bis +4 bevorzugt von -2 bis 2, besonders bevorzugt von -1 bis 1, gemessen in Remission, auf.

Dieser Farbort wird von Beobachtern allgemein als schwarz oder zumindest als dunkel wahrgenommen, was aus ästhetischen Gründen für Einrichtungs- und Ausstattungsgegenstände bevorzugt wird. Farborte mit einem L* von mehr als 40 erscheinen zu hell, um als schwarz wahrgenommen zu werden. Farborte mit einem Betrag von |a*| größer als 6 und/oder einem Betrag von |b*| größer als 6 werden deutlich als farbig empfunden und nicht als schwarz. Je kleiner die Werte von L*, |a*| und |b*| sind, desto dunkler und weniger bunt wird der Farbton empfunden.

Trennelemente mit einem L*-Wert von weniger als 40 und insbesondere von weniger als 35, 30 oder sogar 28 haben gegenüber Trennelementen mit höherem L*-Wert zusätzlich den Vorteil, dass sie im Vergleich insgesamt weniger Licht reflektieren. Dadurch kann das Licht von im Innenbereich eines erfindungsgemäßen Gegenstandes montierten Leuchtelementen von einem Beobachter im Außenbereich besser wahrgenommen werden, da der Kontrast, also das Verhältnis zwischen transmittierter Helligkeit des Leuchtelements zu reflektierter Helligkeit des Umgebungslichts, größer ist. Dies ist insbesondere in typischen Einbausituation von Einrichtungs- und Ausstattungsgegenständen mit einer hellen Umgebungsbeleuchtung, wie es beispielsweise bei Arbeitsbeleuchtungen in Küchen und Laboren üblicherweise der Fall ist, von Vorteil. Hierdurch kann auch der Bedienkomfort und die Bediensicherheit eines solchen Gegenstandes verbessert werden. Dies ist insbesondere im Vergleich zu transparenten, nicht eingefärbten Gläsern und Glaskeramiken mit gesputterten metallischen Beschichtungen, beispielsweise aus Titan oder Silizium, vorteilhaft. Solche metallischen Beschichtungen weisen üblicherweise einen L*-Wert von mehr als 70 auf.

Diese Farbkoordinaten werden gemessen, indem das Trennelement auf eine Schwarzfalle gelegt wird und dann mit einem handelsüblichen Farbmessgerät, beispielsweise dem Spektralphotometer CM-700d der Firma Konica Minolta, unter Verwendung der Normlichtart D65, einem 10° Standard-Beobachter der Farbort in Remission gemessen wird. Als Schwarzfalle kann beispielsweise die Schwarz-Glaskachel CM-A511 von Konica Minolta verwendet werden. Die Bezeichnung "Messung gegen eine Schwarzfalle" bedeutet in diesem Sinne, dass die zu messende Probe zwischen dem Messgerät und einer Schwarzfalle angeordnet ist.

Weiterhin ist das Trennelement dadurch gekennzeichnet, dass der Farbort von Licht der Normlichtart D65 sowohl nach Durchtritt durch das Trennelement als auch nach Durchtritt durch das die Glaskeramik als solche innerhalb eines Weißbereichs W1 liegt, der im Chromatizitätsdiagramm CIExyY-2° durch die folgenden Koordinaten bestimmt ist:

| **Weißbereich W1** | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Der Weißbereich W1 ergibt sich dabei als ein Bereich entlang der Schwarzkörperkurve im CIExyY-Farbraum, der von ca. 2.750 K bis ca. 1.000.000 K Farbtemperatur reicht und an der oberen Grenze um einen Wert von ca. y = 0,04 gegenüber der Schwarzkörperkurve nach oben und an der unteren Grenze um ca. y = 0,07 nach unten verschoben ist. Hieraus ergibt sich der folgende Effekt: Licht der Normlichtart D65 hat per Definition eine Farbtemperatur von ca. 6500 K und bei direkter Betrachtung mit einem 2° Beobachter einen Farbort von x = 0,31 und y = 0,33. Mit der vorliegenden Erfindung kann also bei Durchtritt von Licht durch das Trennelement der Farbort des Lichtes im Wesentlichen entlang der Schwarzkörperkurve, sowohl zu höheren als auch zu niedrigeren Farbtemperaturen verschoben werden, ohne einen unerwünschten Farbstich zu erzeugen. Weißes Licht wird also nach dem Durchtritt immer noch als weißes Licht wahrgenommen.

Der Farbort von Licht nach Durchtritt durch das Trennelement kann beispielsweise mit dem Farbmessgerät CS-150 von Konica Minolta gemessen werden. Ebenso ist es möglich das Transmissionsspektrum des Substrats zu messen und damit und mit Hilfe des bekannten Spektrums von D65-Normlicht und der Augenempfindlichkeit eines 2°-Normalbeobachters entsprechend der Vorgaben des CIE den Farbort zu berechnen.

In einer bevorzugten Ausführungsform ist das Trennelement dadurch gekennzeichnet, dass der Farbort von Licht der Normlichtart D65 nach Durchtritt durch das Trennelement innerhalb eines Weißbereichs W2 liegt, der im Chromatizitätsdiagramm CIExyY-2° durch die folgenden Koordinaten bestimmt ist:

| Weißbereich W2 | |
|---|---|
| x | y |
| 0,25 | 0,27 |
| 0,32 | 0,36 |
| 0,41 | 0,42 |
| 0,42 | 0,36 |
| 0,35 | 0,31 |
| 0,27 | 0,24 |

Der Weißbereich W2 ergibt sich dabei als ein Bereich entlang der Schwarzkörperkurve im CIExyY-Farbraum, der von ca. 3.500 K bis ca. 20.000 K Farbtemperatur reicht und an der oberen Grenze um einen Wert von ca. y = 0,025 gegenüber der Schwarzkörperkurve nach oben und an der unteren Grenze um ca. y = 0,04 nach unten verschoben ist. Dieser Bereich erstreckt sich im Vergleich zu W1 also entlang eines kürzeren Abschnitts der Schwarzkörperkurve und weist eine geringere Abweichung in den x- und y-Koordinaten von der Schwarzkörperkurve auf.

Dieser Abschnitt der Schwarzkörperkurve von 3.500 K bis 20.000 K entspricht dabei den Farborten, die von natürlichem Sonnenlicht abgedeckt werden können. Eine Abendsonne kurz vor Beginn der Dämmerung entspricht einem Schwarzkörperstrahler mit ca. 3.500 K, ein klarer Himmel zur Mittagszeit entspricht einem Schwarzkörperstrahler mit ca. 20.000 K. Farborte auf oder in der Nähe der Schwarzkörperkurve werden insbesondere in diesem Bereich deshalb als Weiß und besonders natürlich wahrgenommen.

Besonders bevorzugt ist das Trennelement dadurch gekennzeichnet, dass der Farbort von Licht der Normlichtart D65 nach Durchtritt durch das Glaskeramiksubstrat des Trennelementes innerhalb eines Weißbereichs W3 liegt, der sich entlang der Schwarzkörperkurve im CIExyY-Farbraum von ca. 5.000 K bis ca. 20.000 K Farbtemperatur erstreckt und an der oberen Grenze um einen Wert von ca. y = 0,025 gegenüber der Schwarzkörperkurve nach oben und an der unteren Grenze um ca. y = 0,04 nach unten verschoben ist. Der Weißbereich W3 entspricht also im Wesentlichen dem Bereich W2, beginnt aber erst bei einer Farbtemperatur von 5.000 K. Dieser Farbbereich entspricht Tageslichtweiß und wird vom menschlichen Beobachter entsprechend als besonders reines Weiß, insbesondere als Kaltweiß, wahrgenommen.

| **Weißbereich W3** | |
|---|---|
| x | y |
| 0.250 | 0.270 |
| 0.290 | 0.320 |
| 0.340 | 0.370 |
| 0.360 | 0.320 |
| 0.310 | 0.280 |
| 0.270 | 0.240 |

Dies gelingt mit der vorliegenden Erfindung überraschender Weise auch ohne die Verwendung eines Schwarzkörperkompensationsfilters zum Ausgleich des Transmissionsverlaufs des Trennelements. Unter einem Schwarzkörperkompensationsfilter wird dabei im Sinne der vorliegenden Erfindung ein optischer Filter verstanden, dessen Transmissionsspektrum so auf das Transmissionsspektrum des Trennelementes abgestimmt ist, dass Licht der Normlichtart D65 nach Durchtritt durch den Schwarzkörperkompensationsfilter und das Trennelement einen Farbort mit Koordinaten innerhalb des Weißbereichs W1 oder gegebenenfalls W2 aufweist.

Erfindungsgemäß ist ein solcher Filter nicht notwendig, da Licht der Normlichtart D65 nach Durchtritt durch das Trennelement bereits einen Farbort in diesem Bereich aufweist. Ein solcher Filter kann optional dennoch zwischen dem Trennelement und einer Anzeigeeinrichtung angeordnet sein, beispielsweise, wenn verschiedene Bereiche des Trennelements für transmittiertes Licht der Normlichtart D65 unterschiedliche Farborte innerhalb des Bereichs W1 oder W2 erzeugen sollen.

Schwarzkörperkompensationsfilter können beispielsweise in Form aufgedruckter, aufgetragener, angedrückter oder entsprechend angeordneter Schichten, Folien oder Platten vorliegen. Auch andere Farbkompensationsfilter sind denkbar, beispielsweise, um Leuchterscheinungen außerhalbe des Weißbereichs W1 zu erzeugen. So kann beispielsweise im Innenbereich des Gegenstandes emittiertes weißes Licht für einen Beobachter im Außenbereich farbig, beispielsweise blau, rot, grün oder mit einer beliebigen anderen Farbe, erzeugt werden.

Trennelemente, die die oben genannte Anforderung erfüllen, umfassen beispielsweise neuartige Glaskeramiksubstrate, die aus einer transparenten, eingefärbten LAS-Glaskeramik bestehen, die als färbende Komponenten 0,003 - 0,25 Gew.-% MoOs und/oder weniger als 0,2 Gew.-% Nd₂O₃ und/oder weniger als 0,015 Gew.-% V₂O₅ enthalten. Wie im Folgenden erläutert wird, ist es vorteilhaft jede dieser drei Komponenten unabhängig von den anderen aus den genannten Bereichen zu wählen. Besonders bevorzugt werden jedoch wenigstens zwei oder sogar alle drei dieser Komponenten gleichzeitig aus diesen Bereichen gewählt.

Diese neuartigen und gegenüber dem Stand der Technik deutlich farbneutraleren Glaskeramiken bieten aufgrund ihrer Transmissionscharakteristik große Vorteile beim modularen Verbau, wie z.B. bei den marktüblichen modular aufgebauten Kochfeldern und ebenso in Kombination mit anderen glasbestückten Geräten wie z.B. Backöfen mit farbneutralen Vorsatzscheiben oder Kühlschränken mit Glasfronten.

Die transparenten, eingefärbten Glaskeramiken unterscheiden sich dabei von den transparenten, nicht eingefärbten Glaskeramiken dadurch, dass die Transmission über die gezielte Zugabe einer oder mehrerer färbenden Verbindungen, die im Sichtbaren absorbieren, erniedrigt ist. Diese färbenden Verbindungen als Bestandteil der Zusammensetzung einer eingefärbten Glaskeramik erhöhen also im Vergleich zu einer nicht eingefärbten Glaskeramik den Absorptionskoeffizienten der Glaskeramik. Der resultierende spektrale Verlauf der Transmissionskurve für eine definierte Dicke bedingt die Farbe der Glaskeramik und deren Helligkeit.

Synonym zu dem Begriff eingefärbte Glaskeramik wird in der Literatur auch der Begriff volumengefärbte Glaskeramik verwendet. Beide Begriffe stellen darauf ab, dass die Glaskeramik in ihrer Zusammensetzung färbende Bestandteile enthält, die einen Einfluss auf den Absorptionskoeffizienten der Glaskeramik haben. Damit unterscheiden sich diese Materialien fundamental von nicht eingefärbten Glaskeramiken, die zur Farbgebung eines daraus hergestellten Artikels eine farbige Beschichtung aufweisen. Eine solche Beschichtung hat keinerlei Einfluss auf den Absorptionskoeffizienten der Glaskeramik.

Ein Mindestgehalt von 0,003 Gew.-% MoOs ist bei solchen bevorzugten Glaskeramiken vorteilhaft, um die gewünschte Farbwirkung zu erhalten. Wenn niedrigere Lichttransmission gewünscht ist, sind höhere MoO₃- Gehalte vorteilhaft. Ebenso sind bei zunehmenden Fe₂O₃- oder V₂O₅- Gehalten höhere MoOs- Gehalte vorteilhaft, da sowohl Fe₂O₃ als auch V₂O₅ die Transmissionscharakteristik der Glaskeramik so verändern, dass der Farbort von Licht der Normlichtart D65 nach Durchtritt durch die Glaskeramik von der Schwarzkörperkurve weg verschoben wird, insbesondere zu roten Farbtönen hin. Bevorzugt sind zur Einstellung der Farbwirkung mindestens 0,01, bevorzugt mindestens 0,03 Gew.-% MoOs enthalten. Da in der Glaskeramik verschieden Wertigkeiten des Mo-Atoms vertreten sind, sind die angegebene Gehalte der Zusammensetzung analytisch auf diese Verbindung bezogen. Als Obergrenze beträgt der MoOs-Gehalt bevorzugt 0,3, weiter bevorzugt 0,25 und besonders bevorzugt 0,2 Gew.-%.

Mit einem Gehalt von 0,003 - 0,25 Gew.-% MoOs ist es möglich, den Lichttransmissionsgrad eines 2 bis 8 mm dicken Glaskeramiksubstrats auf einen Wert von 0,1 % bis < 12 % einzustellen.

Es hat sich gezeigt, dass die Zugabe von MoOs eine Absenkung der Glasviskosität bewirkt und günstig ist für die Schmelzbarkeit und Läuterung des Glases. Allerdings wirken insbesondere die reduzierten Molybdänoxid-Spezies auch als Keimbildner und können die Entglasungsstabilität verschlechtern. Daher ist es vorteilhaft, den Gehalt zu begrenzen.

Diese Glaskeramiken enthalten vorzugsweise weniger als 0,2 Gew.-% Nd₂O₃, da bei diesem Farboxid die Farbwirkung über schmale Absorptionsbanden im Bereich bei 526, 584 und 748 nm zustande kommt. Licht in diesen Wellenlängenbereich wird beim Durchgang durch die Glaskeramik stärker absorbiert. Der weiter bevorzugte Gehalt an Nd₂O₃ beträgt weniger als 0,06 Gew.-%. Besonders bevorzugt wird kein Nd₂O₃ eingesetzt, so dass die Glaskeramik ist technisch frei von Nd₂O₃ ist. An Verunreinigungen sind dann in der Regel weniger als 10 ppm enthalten.

Insbesondere die Komponente V₂O₅ verschiebt den Farbort von transmittiertem Licht der Normlichtart D65 im CIE-Farbsystem zu höheren x- Werten, also ins Orangerote. Die Komponente eignet sich zwar in geringen Mengen für eine Kombinationsfärbung mit MoOs. Allerdings färbt V₂O₅ stärker, so dass der Gehalt vorzugsweise begrenzt wird, um die erfindungsgemäße Farbwirkung einfacher zu erreichen. Höhere Gehalte als 0,015 Gew.-% sind dafür ungünstig. Bevorzugt beträgt der V₂O₅-Gehalt weniger als 0,01 Gew.-% und weiter bevorzugt maximal 0,005 Gew.-%. Besonders bevorzugt wird kein V₂O₅ der Zusammensetzung beigegeben und es liegen nur Verunreinigungen von wenigen, meist 1-15 ppm in der Glaskeramik vor. Das Molybdänoxid ist in dieser bevorzugten Ausführungsform also das Hauptfärbemittel und es gilt die Komponentenbeziehung MoOs / V₂O₅ > 1, bevorzugt > 3, besonders bevorzugt > 5.

In einer besonders bevorzugten Ausführungsform enthält eine Glaskeramik als färbende Komponenten 0,003 - 0,5 Gew.-% MoOs und weniger als 0,2 Gew.-% Nd₂O₃ und weniger als 0,015 Gew.-% V₂O₅. Mit einer solchen Glaskeramik können besonders farbneutrale Substrate zur Verwendung in **Einrichtungs- oder Ausstattungsgegenständen bereitgestellt werden.**

Eine weitere bevorzugte Zusammensetzung einer Glaskeramik, die die obengenannten Anforderungen erfüllt, besteht in Gew.-% auf Oxidbasis im Wesentlichen aus:

| | |
|---|---|
| Li₂O | 2,5 - 5,5 |
| Σ Na₂O + K₂O | 0,1 - < 4 |
| MgO | 0-3 |
| Σ CaO + SrO + BaO | 0 - 5 |
| ZnO | 0 - 4 |
| B₂O₃ | 0 - 3 |
| Al₂O₃ | 16 - 26 |
| SiO₂ | 58 - 72 |
| TiO₂ | 1,5 - 5,5 |

| | |
|---|---|
| ZrO₂ | 0-2,5 |
| SnO₂ | 0,1 - < 0,7 |
| Σ TiO₂ + ZrO₂ + SnO₂ | 3 - 6,5 |
| P₂O₅ | 0 - 5 |
| MoOs | 0,003 - 0,5 |
| Fe₂O₃ | 0 - 0,025 |
| V₂O₅ | 0 - 0,015 |
| Nd₂O₃ | 0 - < 0,02 |
| Cr2O3 | 0 - < 0,01 |

Der Begriff "im Wesentlichen besteht aus" bedeutet, dass die aufgeführten Komponenten wenigstens 96 % in der Regel wenigstens 98 % der Gesamtzusammensetzung betragen sollen. Diese Glaskeramiken enthalten optional Zusätze chemischer Läutermittel wie As2O3, Sb2O3, CeO2 und von Läuterzusätzen wie Manganoxid, Sulfat-, Halogenid-Verbindungen (F, Cl, Br) in Gesamtgehalten bis zu 2,0 Gew.-%.

Verbindungen einer Vielzahl von Elementen wie z. B. den Alkalien Rb, Cs oder Elementen wie Mn, Hf sind bei großtechnisch verwendeten Gemengerohstoffen übliche Verunreinigungen. Andere Verbindungen wie z.B. solche der Elemente W, Nb, Ta, Y, Seltene Erden, Bi, V, Cr, Ni können ebenfalls als Verunreinigung großtechnisch verwendeter Gemengerohstoffe, typischerweise im ppm-Bereich, enthalten sein.

Aus Gründen des Umwelt- und des Arbeitsschutzes wird auf den Einsatz von giftigen oder bedenklichen Rohstoffen nach Möglichkeit verzichtet. Daher ist die Glaskeramik vorzugsweise frei von umweltschädlichen Stoffen, wie Arsen (As), Antimon (Sb), Cadmium (Cd), Blei (Pb), Caesium (Cs), Rubidium (Rb) Halogeniden und Schwefel (S), abgesehen von unvermeidbaren Verunreinigungen im Bereich von bevorzugt 0 bis kleiner 0,5 Gewichtsprozent, besonders bevorzugt kleiner 0,1 Gewichtsprozent, ganz besonders bevorzugt kleiner 0,05 Gewichtsprozent. Die Angaben in Gewichtsprozent beziehen sich dabei auf die Glaszusammensetzung auf Oxidbasis.

Allgemein können entweder natürlich vorkommende Rohstoffe oder chemisch aufbereitete beziehungsweise synthetisch hergestellte Rohstoffe für die Herstellung verwendet werden. Natürlich vorkommende Rohstoffe sind in der Regel kostengünstiger als äquivalente chemisch aufbereitete oder synthetisierte Rohstoffe. Die Verwendbarkeit natürlicher Rohstoffe ist allerdings durch die üblicherweise hohen Mengen an Verunreinigungen beschränkt. Beispiele für natürlich vorkommende Rohstoffe sind Quarzsand, Spodumen und Petalit. Chemisch aufbereitete oder synthetisch hergestellte Rohstoffe enthalten in der Regel nur sehr wenige Verunreinigungen. Beispiele für gebräuchliche aufbereitete oder synthetisierte Rohstoffe sind Lithiumcarbonat oder Titandioxid-Pulver.

Die Verunreinigungen durch typische Spurenelemente bei den verwendeten technischen Rohstoffen liegen üblicherweise bei 200 ppm B₂O₃, 30 ppm Cl, 1 ppm CoO, 3 ppm Cr₂O₃, 200 ppm Cs₂O, 3 ppm CuO, 200 ppm F, 400 ppm HfO₂, 3 ppm NiO, 500 ppm Rb₂O, 5 ppm V₂O₅.

Insbesondere der Gehalt an Cr₂O₃ beträgt bevorzugt weniger als 0,02 Gew%, besonders bevorzugt weniger als 0,01 Gew% und insbesondere ist die Glaskeramik bis auf die genannten Verunreinigungen frei von Cr₂O₃.

Alternativ zu einem solchen mittels Molybdänoxid als Hauptfärbemittel eingefärbten transparenten Glaskeramiksubstrats, kann das Trennelement auch ein transparentes, nicht eingefärbtes, temperaturbeständiges Substrat aus Glaskeramik mit einer Beschichtung mit entsprechenden optischen Eigenschaften umfassen.

Am effektivsten kann eine sehr gute thermische Temperaturbeständigkeit erreicht werden, indem das Glaskeramiksubstrat einen linearen thermischen Ausdehnungskoeffizienten CTE, gemäß ISO 7991, von höchstens ±2,5 × 10-6/K, vorzugsweise höchstens ±1,5 × 10-6/K im Temperaturbereich zwischen 20 °C und 300 °C, bevorzugt zwischen 20 °C und 700 °C, aufweist. Insbesondere bei Glaskeramiken kann der CTE in diesem Temperaturbereich auch negative Werte annehmen. Bei einem derart niedrigen thermischen Ausdehnungskoeffizienten führen auch große Temperaturgradient nicht zum Aufbau von Spannungen im Substrat. Dieser Wert wird beispielsweise von Lithium-Aluminium-Silikat-Glaskeramiken (LAS-Glaskeramiken), z.B. der Marke CERANO der Firma SCHOTT AG erreicht. Der thermische Ausdehnungskoeffizient zwischen 20°C und 300°C wird auch als CTE α _{20/300} bezeichnet. Der thermische Ausdehnungskoeffizient zwischen 20°C und 700°C wird auch als CTE α_{20/700} bezeichnet

Für einen erfindungsgemäßen Gegenstand kommen nur solche Schichten in Betracht, die einen Farbort mit L* von 20 bis 40, a* von -6 bis 6 und b* von -6 bis 6, gemessen in Remission mit Licht der Normlichtart D65 gegen eine Schwarzfalle in Durchsicht durch das Glaskeramiksubstrat aufweisen. Dadurch scheiden insbesondere helle, also stark reflektierende, bunte und metallisch spiegelnde Schichten aus.

Gleichzeitig muss der Lichttransmissionsgrad der Schichten in einem Bereich von 0,1 % bis 12 % eingestellt werden können, gemessen in Transmission durch die Schicht und das Substrat hindurch.

Hierdurch scheiden beispielsweise transparente Schichtsysteme, z.B. mehrlagige Schichten aus Oxiden, Nitriden und/oder Oxinitriden, aus. Mit solchen interferenzoptischen Schichtsystemen können zwar die a*- und b*-Komponenten des Farborts in Remission gezielt angepasst werden, es ist aber nicht möglich gleichzeitig einen niedrigen Lichttransmissionsgrad von 0,1 bis 12 % und eine niedrige Helligkeit in Remission, also einen L*-Wert zwischen 20 und 40 einzustellen. Bei solchen Systemen kann mangels absorbierender Materialien nur zwischen einer hohen Transmission bei niedriger Reflexion, z.B. Anti-Reflex-Schichten, oder einer niedrigen Transmission bei hoher Remission, z.B. dichroitische Spiegel, gewählt werden. Eine niedrige Transmission bei gleichzeitig niedriger Remission ist nicht realisierbar.

Davon abgesehen sind mehrlagige, insbesondere interferenzoptische, Schichtsysteme schon aus Kostengründen für Einrichtungs- und Ausstattungsgegenstand für Küchen und Labore nicht geeignet.

Diese Anforderungen werden überraschender Weise von neuartigen Schichten auf Basis von Spinellen, Cermets, Carbiden oder Carbonitriden, erfüllt.

Spinelle sind aus der Mineralogie und von keramischen Vollkörpern bekannt. Die Erfinder haben herausgefunden, dass oxidische Spinelle überraschenderweise als Legierung von einem metallischen Target reaktiv gesputtert unter unterstöchiometrischer Zugabe von Sauerstoff einen sehr niedrigen L*-Wert von weniger als 35 aufweisen. Dadurch lassen sich prinzipiell dunkle Farbtöne bei gleichzeitig niedriger elektrischer Leitfähigkeit herstellen. Auch der Transmissionsverlauf solcher Schichten verläuft flach, sodass Licht der Normlichtart D65 nach Durchtritt durch eine solche Beschichtung innerhalb des Weißbereichs W1 liegt.

Im Wellenlängenbereich von 780 nm bis ca. 4.500 nm weisen Beschichtungen aus Spinellen hohe spektrale Transmissionsgrade von über 30 % oder sogar über 50 %, bis hin zu mehr als 80 % auf. Im Wesentlichen ist der spektrale Transmissionsgrad im infraroten Spektralbereich bei Abdeckplatten mit SpinellBeschichtungen nicht durch die Beschichtung, sondern durch das verwendete Substrat limitiert. Nicht eingefärbte, transparente LAS-Glaskeramiken, beispielsweise der Marke CERAN CLEARTRANSO der SCHOTT AG mit einer Spinellbeschichtung weisen bei einer Wellenlänge von ca. 3.750 nm einen spektralen Transmissionsgrad von über 40 % auf. Solche Beschichtungen sind also insbesondere für die Verwendung von Strahlungsheizelementen oder Infrarotsensoren hinter oder unter dem Trennelement geeignet. Die Flächenwiderstände liegen bei mehr als 1 MΩ/□ bei einer Prüfspannung von 1000V. Somit sind diese Schichten auch für die Verwendung mit kapazitiven und induktiven Sensoren und Induktionsspulen zur Energieübertragung, wie beispielsweise Induktionsheizelementen, geeignet.

Geeignete Spinelle weisen eine Zusammensetzung gemäß der Formel AₓCᵤB_{y}DᵥE_{z}F_{w} auf, wobei A und C ausgewählt sind aus der Gruppe bestehend aus Cr2+; Mn2+, Fe2+, Co2+, Ni2+, Cu2+, Zn2+; Al3+, Sn2+/4+, Ti4+, Zr4+, oder der Lanthanide und Mischungen davon. B und D sind ausgewählt aus der Gruppe bestehend aus Mn3+, Fe3+, Co3+, Ni3+, Cu3+, Al3+, Ga3+, Sn4+, Sc3+, Ti4+, Zn2+, oder der Lanthanide und Mischungen davon. E und F sind bevorzugt ausgewählt aus der Gruppe bestehend aus den divalenten Anionen von S, Se und O und Mischungen davon. Die Werte von x, u, y, v, z und w erfüllen die folgenden Formeln: $0 , 125 < \left(x+u\right) / \left(y+v\right) \leq 0 , 55$ und $z + w = 4 .$

Bevorzugt weist die Beschichtung Kristallite auf, wobei zumindest 95 Gew.-% der Kristallite symmetrische, kubische Kristallstrukturen vom Spinell-Typ zeigen.

Um die Farbneutralität zu verbessern ist es möglich über eine zwischen dem Substrat und der Spinellbeschichtung angeordneten Ausgleichsschicht das Schichtsystem zu verändern. Der L*-Wert in Remission wird dadurch nahezu nicht beeinflusst. Ausgleichsschichten können Materialien sein, welche ihre Brechzahlen zwischen Substrat und Spinellbeschichtung im sichtbaren Spektrum aufweisen, z.B. CeO2, HfO2, Y2O3, Si3N4, AlN, SiO2, Al2O3, AlTiOx, TiSiOx, SiOxNy, AlSiOxNy. Auch unterstöchiometrische Varianten können als Ausgleichsschicht verwendet werden. Die Schichtdicke solcher Ausgleichsschichten liegt bevorzugt im Bereich 25 bis 500 nm, besonders bevorzug 35 bis 250 nm. Überraschender Weise ändert eine solche Ausgleichsschicht nur den Farbort der Beschichtung in Remission, nicht jedoch die Transmissionscharakteristik. Eine solche Ausgleichsschicht wirkt also insbesondere nicht als Schwarzkörperkompensationsfilter.

In einer bevorzugten Ausführungsform besteht die Beschichtung aus einem Spinell aus einem der folgenden Materialsysteme: Aluminiumspinelle, Chromspinelle, Eisenspinelle, Titanspinelle, Kobaltspinelle. Besonders bevorzugt besteht die Beschichtung aus CoFeMnCr-Spinell und weist optional eine Ausgleichsschicht aus SiOxNy auf.

In einer weiteren bevorzugten Ausführungsform besteht die Beschichtung aus einem Cermet mit einer oxidischen Matrix aus SiO₂, Al₂O₃, ZrO₂, TiO₂ oder Mischoxiden davon und einer metallischen Komponente aus Ti, Si, Al, Mo, Zr, Cu, Nb, Co, Cr, W, Ta, Ni, B oder einer Legierung aus wenigstens zwei dieser Metalle. Unter der Bezeichnung Cermets werden im Sinne der vorliegenden Erfindung Verbundwerkstoffe aus einer oxidischen Matrix mit einer darin dispergierten metallischen Komponente verstanden. Ausführungsformen, die solche Verbundwerkstoffe enthalten, werden hier besonders bevorzugt, da sie die optischen Eigenschaften der metallischen Komponente mit der niedrigen elektrischen Leitfähigkeit des Matrixmaterials verbinden und dadurch für die Beschichtung einer erfindungsgemäßen Abdeckplatte besonders gut geeignet sind.

Diese Cermet-Schichtsysteme können sich dadurch auszeichnen, dass sie einen sehr hohen Flächenwiderstand, > 20 MΩ/□, bei einstellbarem Lichttransmissionsgrad von 0,1 bis <12 % aufweisen. In diesen Transmissionsbereichen können sehr farbneutrale Schichten mit niedrigem L*-Wert hergestellt werden. Der mittlere spektrale Reflexionsgrad von Cermet-Beschichtungen mit einem Lichttransmissionsgrad von 0,1 bis <12 % liegt bei ca. 5 % mit einem Verhältnis von größtem zu kleinstem Wert im sichtbaren Spektralbereich von ca. 1,5. Der Transmissionsverlauf solcher Schichten hat sich als sehr flach erwiesen, so dass Licht der Normlichtart D65 nach Durchtritt durch die Beschichtung im Weißbereich W1 oder sogar im Weißbereich W2liegen kann. Im infraroten Spektralbereich zwischen 780 und 4250 nm weisen diese Cermet-Schichtsysteme nur eine schwache Absorption auf, sodass auch hier der spektrale Transmissionsgrad in weiten Bereichen durch das Substrat und nicht durch die Beschichtung limitiert wird. Die untersuchten Cermet-Schichten können bei einer Wellenlänge von ca. 3.750 nm einen Transmissionsgrad von mehr als 40 % aufweisen.

In einer bevorzugten Ausführungsform werden oxidische Matrix und metallische Komponente so aufeinander abgestimmt, dass sie eine erhöhte thermische Stabilität aufweisen. Die thermische Stabilität kann beispielsweise durch Messung des CIELAB-Farbortes nach einer Belastung der Probe bei 380 °C für 80 Stunden und einem Vergleich der Messwerte mit der unbelasteten Probe erfolgen. Besonders vorteilhaft ist dabei eine Materialpaarung von sauerstoffaffinem Metall zur Bildung der Metalloxidmatrix und einem weniger sauerstoffaffinen Metall für die Bildung der metallischen Komponente im Cermet.

Besonders bevorzugt werden SiO₂ oder Al₂O₃ als die Metalloxidmatrix in Kombination mit Mo als die metallische Komponente. Si bzw. Al haben eine höhere Sauerstoffaffinität als Mo, wodurch die Bildung von SiO₂ bzw. Al₂O₃ gegenüber Mo-Oxid bevorzugt ist. Gleichzeitig wirkt bei sehr dichten Schichten die oxidische Matrix als Oxidationsbarriere und schützt das Mo vor Oxidation. Auch Mischoxide, insbesondere aus SiO₂ und Al₂O₃, sind für die Verwendung als Metalloxidmatrix geeignet.

In einer bevorzugten Ausführungsform wird SiO₂ für die oxidische Matrix verwendet. Dann kann das Verhältnis von Mo zu Si in der Beschichtung mindestens 5:95, bevorzugt mindestens 10:90, besonders bevorzugt 15:85 und insbesondere 20:80 in Gew.-% betragen. Dabei kann es vorzugsweise höchstens 50:50, bevorzugt höchstens 45:55, besonders bevorzugt höchstens 40:60 und insbesondere höchstens 35:65 in Gew.-% betragen. Das Verhältnis von Mo zu Si in der Beschichtung kann also beispielsweise in einem der Bereich 5:95 bis 50:50 Gew.-%, 10:90 bis 45:55 Gew.-%, 15:85 bis 40:60 Gew.-% oder sogar 20:80 bis 35:65 Gew.-% liegen. Zur Bestimmung dieser Verhältnisse werden die Gewichtsanteile von Mo und Si in der Beschichtung verwendet. Der Gewichtsanteil von Sauerstoff oder anderen Bestandteilen der Beschichtung wird dabei nicht berücksichtigt. Der Fachmann wird den Anteil an Sauerstoff so einstellen, dass die Beschichtung den jeweiligen Anforderungen genügt.

In einer besonders bevorzugten Ausführungsform enthält die Beschichtung außer Mo, Si, Sauerstoff und unvermeidbaren Verunreinigungen keine **weiteren Bestandteile.**

Die Verwendung solcher MoSiOₓ-Cermets hat sich als besonders vorteilhaft herausgestellt, da diese einen besonders flachen Transmissionsverlauf und einen besonders flachen Verlauf des spektralen Reflexionsgrades aufweisen und gleichzeitig einen hohen elektrischen Widerstand und eine hohe thermische Beständigkeit.

Zur thermischen Stabilisierung können Cermets, wie auch Spinelle, zusätzlich mit einer Oxidationsbarriere versehen werden. Dies können z.B. sein: Oxide oder Nitride oder Oxinitride aus zumindest einem der folgenden Materialien Si, Al, Ti, Zr, Sn, Cr, Zn, Nb, Y, Ta, Mo, B. Für Cermets hat sich insbesondere Siliziumnitrid als bevorzugte Oxidationsbarriere erwiesen, für Spinelle insbesondere Siliziumoxid. Oxidationsbarriereschichten können sich auch positiv auf die Transmission im Infraroten auswirken.

Die Erfinder haben herausgefunden, dass es überraschenderweise möglich ist, mit Beschichtungen aus Carbiden und Carbonitriden auf Glaskeramik niedrige L*-Werte im Bereich von 30 bei einem Farbort von -3 < a* < 3, -3 < b* < 3 in Remission herzustellen. Darüber hinaus weisen die Schichten einen mittleren Reflexionsgrad von ca. 4 % bis 8% und ein Verhältnis von maximalem zu minimalen Reflexionsgrad im sichtbaren Spektralbereich von ca. 1,5 auf. Im infraroten Spektralbereich transmittieren diese Schichten bereits bei 950 nm mehr als 50% und weisen im Bereich ca. 1.250 nm bis mindestens 4.000 nm keine nennenswerte Absorption auf, so dass in diesem Bereich die spektrale Transmission einer Abdeckplatte durch das Substrat limitiert wird.

Diese Schichtsysteme können als Einzelschichten oder als Schichtsystem mit den schon für Spinelle beschriebenen Ausgleichsschichten zwischen Substrat und Beschichtung und/ oder mit zusätzlicher Oxidationsbarrieren hergestellt werden. Der Fachmann wird dabei aus den oben beschriebenen Materialien eine Kombination mit passendem Brechungsindex, der zwischen dem des Substrats und dem der Beschichtung liegt, und einer passenden Schichtdicke auswählen. Bei der Verwendung von Schichten auf Basis von Carbiden oder Carbonitriden ist vorzugsweise zumindest eines der folgenden Materialien in der Beschichtung enthalten: Si, Zr, W, Ti, Mo, Cr, B, DLC.

Alle genannten Schichtsysteme werden vorzugsweise mittels Magnetronsputtern, insbesondere mittels reaktiven Mittelfrequenzsputtern oder Hochfrequenzsputtern hergestellt. Beim reaktiven Mittelfrequenzsputtern können metallische Targets, beispielsweise aus reinen Metallen oder aus Legierungen, zum Einsatz kommen und als reaktive Prozessgase beispielsweise Sauerstoff oder Stickstoff zugeführt werden. Als nichtreaktives Prozessgas wird Argon verwendet.

Spinellbeschichtungen können beispielsweise mittels reaktivem Mittelfrequenzsputtern hergestellt werden, indem ein Target aus einer Legierung der Metallkationen, insbesondere ein Target aus einer CoFeMnCr-Legierung, verwendet wird und Sauerstoff als Reaktivgas verwendet wird. Über die Menge des zugegebenen Sauerstoffs lässt sich dabei die Stöchiometrie der Beschichtung variieren und insbesondere auch unterstöchiometrisch, also mit Sauerstoffmangel, einstellen. Besonders bevorzugt wird für die Targetlegierung ein Zusammensetzungsbereich in Gew.-% von

| | |
|---|---|
| Co | 15-25, insbesondere 19-21, |
| Fe | 30-40, insbesondere 34-36, |
| Mn | 14-24, insbesondere 18-20 und |
| Cr | 21-31, insbesondere 25-27 verwendet |

Das molare Verhältnis der Zusammensetzung des Targets entspricht auch den molaren Anteilen von Co, Fe, Mn und Cr in der Beschichtung.

In einer bevorzugten Ausführungsform, weist das Trennelement ein Glaskeramiksubstrat und eine Beschichtung zur Einstellung des Lichttransmissionsgrades auf, wobei die Beschichtung aus einem der folgenden Materialsysteme besteht: Spinelle, Cermets, Carbide oder Carbonitride.

In einer bevorzugten Ausführungsform weist das Trennelement eine hohe Transmission im infraroten Spektralbereich auf. Dies ermöglicht die Positionierung von infrarotdetektierenden Sensoren im Innenbereich des erfindungsgemäßen Gegenstandes oder die Verwendung von Strahlungsheizelementen wie Infrarotstrahlern. Je nach Sensor oder Heizelement ist dabei die Transmission in einem speziellen Spektralbereich wichtig.

Die angegebenen Transmissionswerte beziehen sich auf die Gesamttransmission der Probe bzw. des Trennelements, gemessen unter Verwendung einer Ulbrichtkugel. Für diese Messung wird die Probe zwischen einer geeigneten Lichtquelle und einer Ulbrichtkugel am Eingang der Ulbrichtkugel positioniert. An einen seitlich, unter einem Winkel von 90° zum Strahlengang angeordneten Ausgang der Ulbrichtkugel ist ein geeigneter Sensor zur Detektion des transmittierten Lichtanteils angebracht. Durch diese Messanordnung wird sowohl der direkt transmittierte Anteil als auch der streuend transmittierte Anteil des Lichts detektiert.

Für siliziumbasierte Infrarot-Sensoren, wie sie beispielsweise in sogenannten Time-of-flight Sensoren für berührungslose Eingabegeräte für die Gestensteuerung oder Annäherungserkennung, wie dem VL6180X von ST Microelectronics, verwendet werden, ist der Spektralbereich zwischen 850 und 1000 nm besonders relevant. In diesem Bereich weist das Trennelement bevorzugt bei wenigstens einer Wellenlänge eine Transmission von wenigstens 3 %, bevorzugt wenigstens 10 %, besonders bevorzugt wenigstens 30 % auf, um den Einsatz solcher Sensoren zu ermöglichen. Besonders für die Gestensteuerung sind hohe Transmissionen von Vorteil, weil dann Gesten in größerem Abstand von der Außenseite des Trennelements detektiert werden können. Andere Anwendungen für siliziumbasierte Infrarot-Sensoren sind beispielsweise Empfänger für die Signale von Fernbedienungen oder Kommunikationsschnittstellen für die optische Datenübertragung.

InGaAs-basierte Infrarot-Detektoren sind insbesondere im Bereich zwischen 1 und 2 µm empfindlich. Für den Einsatz solcher Detektoren ist das Trennelement geeignet, wenn es bei wenigstens einer Wellenlänge, bevorzugt bei einer Wellenlänge von 1600 nm, eine Transmission von wenigstens 30 %, vorzugsweise wenigstens 45 %, besonders bevorzugt wenigstens 60 % aufweist.

Das Emissionsmaximum eines Strahlungsheizelementes ergibt sich aus dem Wienschen Verschiebungsgesetz und liegt für Temperaturen zwischen 100 °C und 1000 °C zwischen 7,8 µm und 2,3 µm. Aus Gründen der Energieeffizienz und um ein übermäßiges Aufheizen des Trennelements durch ein Strahlungsheizelement zu verhindern, weist das Trennelement im Bereich zwischen 3,25 µm und 4,25 µm bei wenigstens einer Wellenlänge eine Transmission von wenigstens 10 %, bevorzugt wenigstens 20 %, besonders bevorzugt wenigstens 30 % auf. In diesem spektralen Bereich kann auch mit im Innenraum des Gegenstandes angeordneten Bolometern oder Thermosäulen die Temperatur eines heißen Objektes im Außenbereich, beispielsweise einem heißen Kochgefäß, gemessen werden, wenn die Transmission des Trennelements die genannten Mindestanforderungen erfüllt.

In einer bevorzugten Ausführungsform liegt die Dicke des Glaskeramiksubstrats zwischen 2 mm und 12 mm, bevorzugt zwischen 3 und 8 mm, besonders bevorzugt zwischen 3 und 6 mm. Die Dicke des Substrates wird dabei im Wesentlichen von den Anforderungen an die mechanische Beständigkeit und das Gewicht limitiert. Gläser, die dünner als 2 mm sind, können aus technischen Gründen in der Praxis nicht thermisch vorgespannt werden, da die hierfür erforderlichen Kühlraten nicht mit wirtschaftlich vertretbarem Aufwand erreicht werden können. Weiterhin muss beachtet werden, dass die Dicke des Substrates Auswirkung auf seine optischen Eigenschaften haben kann. Die Dicke ist in jedem Fall so zu wählen, dass die genannten Grenzwerte der Transmission eingehalten werden.

Die Erfinder haben festgestellt, dass ein zusätzlicher vorteilhafter Effekt auftritt, wenn das Trennelement so gewählt wird, dass der Farbort von Licht der Normlichtart D65 nach Durchtritt durch das Trennelement, also auch nach Durchtritt durch das Glaskeramiksubstrat, innerhalb des oben genannten Weißbereichs W1 liegt: Überraschenderweise lässt sich mit solchen Trennelementen ein verbesserter Dead-Front-Effekt erzielen. Dies gelingt unabhängig davon, ob die Transmission des Trennelements durch Zugabe entsprechender färbender Komponenten oder über eine Beschichtung eingestellt wird.

Unter dem Dead-Front-Effekt wird der Effekt verstanden, dass im Innern eines erfindungsgemäßen Gegenstands angeordnete elektronische Bauteile im ausgeschalteten Zustand im Außenbereich nicht sichtbar sind, dass aber Licht, dass von eingeschalteten Bauteilen wie Leuchtelementen oder gegebenenfalls Heizelementen ausgesendet wird, mit ausreichender Helligkeit durch das Trennelement hindurchtreten und dadurch im Außenbereich wahrgenommen werden kann. Hierfür muss das Trennelement einerseits eine möglichst niedrige Transmission aufweisen, um den Blick auf die Bauteile zu verhindern, andererseits muss es eine möglichst hohe Transmission aufweisen, um das von Bauteilen emittierte Licht möglichst wenig abzuschwächen.

Dies ist beispielsweise bei den im Stand der Technik bekannten eingefärbten Glaskeramiken für Kochfelder besonders schwierig zu erreichen, da diese aufgrund des vorwiegend zur Färbung verwendeten V₂O₅ einen sehr inhomogenen Transmissionsverlauf aufweisen, der selbst bei optimierten Zusammensetzungen im roten Spektralbereich eine viel höhere Transmission aufweist, als im blauen Spektralbereich. Um aber beispielsweise blaues Licht von Leuchtelementen im Inneren des Kochfeldes nicht zu stark abzuschwächen, muss demnach die Gesamttransmission relativ hoch gewählt werden, was wiederrum zu einer sehr hohen Transmission und damit schlechtem Dead-Front-Effekt im roten Spektralbereich führt. So liegt bei einer typischen aus dem Stand der Technik bekannten eingefärbten Glaskeramik mit einem Lichttransmissionsgrad von 5,6 % der spektrale Transmissionsgrad im blauen Spektralbereich von 450 bis 500 nm bei ca. 2,5 - 3 %, wohingegen er im roten Spektralbereich von 630 bis 680 nm zwischen ca. 15 und 30 % liegt. Dies hat zur Folge, dass sowohl blaues als auch rotes Licht zwar in ausreichendem Maße durch die Glaskeramik hindurchtreten kann, dass aber im roten Spektralbereich kein ausreichender Dead-Front-Effekt vorliegt, da die Bauteile im ausgeschalteten Zustand bei einem spektralen Transmissionsgrad von 15 bis 30 % deutlich, wenn auch nur in roter Farbe, im Außenbereich wahrgenommen werden können.

Erfindungsgemäße Trennelemente mit einem Lichttransmissionsgrad von 2,6 % können beispielsweise einen spektralen Transmissionsgrad von 2,7 % bei 470 nm und bei 630 nm von 3,9 % aufweisen. Durch diesen spektralen Verlauf wird nicht nur erreicht, dass Licht der Normlichtart D65 nach Transmission im Weißbereich W1 liegt, sondern zusätzlich, dass Licht aller Wellenlängen ausreichend durch das Trennelement hindurchtreten kann, aber in keinem Spektralbereich so hohe Transmissionsgrade auftreten, dass der Dead-Front-Effekt negativ beeinflusst wird.

Anders ausgedrückt, können im Vergleich zum Stand der Technik beispielsweise die folgenden Vorteile erzielt werden. Bei gleicher Transmission im blauen Spektralbereich kann ein niedrigerer Lichttransmissionsgrad des Trennelements gewählt werden und somit ein insgesamt besserer Dead-Front-Effekt erzielt werden. Alternativ kann bei gleichem Lichttransmissionsgrad eine höhere Transmission im blauen Spektralbereich und somit bessere Sichtbarkeit von beispielsweise blauen Leuchtelementen und gleichzeitig ein besserer Dead-Front-Effekt erzielt werden. Als weitere Alternative kann bei vergleichbarem Dead-Front-Effekt ein höherer Lichttransmissionsgrad erzielt werden, was beispielsweise für die Energieeffizienz des erfindungsgemäßen Gegenstandes vorteilhaft sein kann.

Der Dead-Front-Effekt kann durch die Messung eines prozentualen Grauwertunterschiedes mit der im Folgenden beschriebenen Messmethode bestimmt werden.

Eine Grauwertmesseinrichtung dient zur Bestimmung prozentualer Grauwerte, insbesondere, um Graustufenunterschiede zwischen verschiedenen Bereichen bestimmen zu können. Der Messaufbau befindet sich in einer Dunkelkammer, um Fremdlicht ausschließen zu können.

In der Dunkelkammer sind vier RAL-Karten platziert. Die erste RAL-Karte hat die RAL-Farbe 9017 (verkehrsschwarz) und die zweite RAL-Karte hat die RAL-Farbe 7012 (basaltgrau). Diese beiden RAL-Karten werden von der Probe nicht bedeckt und dienen zur Kalibrierung. Die dritte RAL-Karte hat ebenfalls die RAL-Farbe 9017 (verkehrsschwarz), die vierte RAL-Karte hat die RAL-Farbe 9003 (signalweiß). Diese beiden Karten werden vollständig von der Probe bedeckt und dienen der Messwerterfassung.

In einem Abstand d, welcher beispielsweise 606 Millimeter beträgt, ist eine Kamera mit einem Objektiv angeordnet. Optional kann vor dem Objektiv ein Filter, beispielsweise ein Langpassfilter oder ein Tristimulus-Filter, angebracht sein.

Bei der verwendeten Messvorrichtung kommen folgende Komponenten zum Einsatz:
- Die Kamera ist ausgebildet als eine acA1920 - 40µm / Graustufenkamera der Basler AG und das Objektiv ist ausgebildet als LM35HC Megapixel der Kowa GmbH.
- Es wird kein optionaler Filter vor dem Objektiv verwendet.

Insbesondere werden folgende Einstellungen der Kamera eingesetzt, welche von dem mit der genannten Graustufenkamera befassten Fachmann aus der zugehörigen Protokolldatei entnommen sind:

| | |
|---|---|
| • Width | 1920 |
| • Height | 1200 |
| • OffsetX | 8 |
| • OffsetY | 8 |
| • CenterX | 0 |
| • CenterY | 0 |
| • BinningHorizontal | 1 |
| • BinningVertical | 1 |
| • ReverseX | 0 |
| • ReverseY | 0 |
| • PixelFormat | Mono8 |
| • TestlmageSelector | Off |
| • GainAuto | Off |
| • GainSelector | All |
| • Gain | 0.00000 |
| • GainSelector | All |
| • BlackLevelSelector | All |
| • BlackLevel | 0.00000 |
| • BlackLevelSelector | All |
| • Gamma | 1.00000 |
| • RemoveParameterLimitSelector | Gain |
| • RemoveParameterLimit | 0 |
| • RemoveParameterLimitSelector | Gain |
| • ExposureAuto | Off |
| • ExposureMode | Timed |
| • ExposureTime | 550000.0 |
| • AcquisitionBurstFrameCount | 1 |
| • TriggerSelector | FrameBurstStart |
| • TriggerMode | Off |
| • TriggerSelector | FrameStart |
| • TriggerMode | Off |
| • TriggerSelector | FrameStart |
| • TriggerSelector | FrameBurstStart |
| • TriggerSource | Line1 |
| • TriggerSelector | FrameStart |
| • TriggerSource | Line1 |
| • TriggerSelector | FrameStart |
| • TriggerSelector | FrameBurstStart |
| • TriggerActivation | RisingEdge |
| • TriggerSelector | FrameStart |
| • TriggerActivation | RisingEdge |
| • TriggerSelector | FrameStart |
| • TriggerDelay | 0 |
| • AcquisitionFrameRateEnable | 0 |
| • AcquisitionFrameRate | 100.00000 |
| • DeviceLinkSelector | 0 |
| • DeviceLinkThroughputLimit | 360000000 |
| • DeviceLinkSelector | 0 |
| • DeviceLinkSelector | 0 |
| • DeviceLinkThroughputLimitModeOn | |
| • DeviceLinkSelector | 0 |
| • ChunkSelector | Gain |
| • ChunkEnable | 0 |
| • ChunkSelector | ExposureTime |
| • ChunkEnable | 0 |
| • ChunkSelector | Timestamp |
| • ChunkEnable | 0 |
| • ChunkSelector | LineStatusAll |
| • ChunkEnable | 0 |
| • ChunkSelector | CounterValue |
| • ChunkEnable | 0 |
| • ChunkSelector | PayloadCRC16 |
| • ChunkEnable | 0 |
| • ChunkSelector | Timestamp |
| • ChunkModeActive | 0 |
| • AutoTargetBrightness | 0.30196 |
| • AutoFunctionProfile | MinimizeGain |
| • AutoGainLowerLimit | 0.00000 |
| • AutoGainUpperLimit | 36.00000 |
| • AutoExposureTimeLowerLimit | 76.0 |
| • AutoExposureTimeUpperLimit | 1000000.0 |

In der Dunkelkammer befinden sich zudem LED-Spots der OSRAM Licht AG mit Farbtemperatur 4000K, EAN: 4052899944282. Die LED-Spots sind so eingestellt, dass auf dem Glaskeramiksubstrat eine Helligkeit von 1200 Lux herrscht. Generell kann unabhängig vom jeweiligen Leuchtmittel, soweit dieses eine für Haushalte übliche Farbtemperatur und/oder spektrale Intensitätsverteilung aufweist, auch eine andere Lichtquelle, wie beispielsweise ein Schwarzkörperstrahler, insbesondere eine handelsübliche Halogenlichtquelle, verwendet werden, soweit diese eine Helligkeit von etwa 1200 Lux erzeugen. Hiermit wird eine Beleuchtungssituation erzielt, die für Küchen und Labore typisch ist. Hinzuweisen ist darauf, dass die mittels der Grauwertmesseinrichtung bestimmten Messwerte von der Helligkeit im Wesentlichen unabhängig sind, so dass auch eine andere Beleuchtung vorgesehen sein kann.

Basierend auf dem erzeugten Graustufenbild stellt die Grauwertmesseinrichtung einen Messwert M1 bereit, welcher der RAL-Karte mit der RAL-Farbe 9017 durch das Glaskeramiksubstrat hindurch betrachtet, entspricht.

Ferner stellt die Grauwertmesseinrichtung einen Messwert M2 bereit, welcher der RAL-Karte mit der RAL-Farbe 9003 durch das Glaskeramiksubstrat hindurch betrachtet, entspricht.

Darüber hinaus stellt die Grauwertmesseinrichtung zwei weitere Messwerte bereit, welche den beiden nicht bedeckten RAL-Karten zur Kalibrierung entsprechen.

Bei der verwendeten Grauwertmesseinrichtung wird das Graustufenbild mit Hilfe der Bildauswertungssoftware Halcon SDK Industry 12 der MVTec Software GmbH ausgewertet. Es hat sich gezeigt, dass die Messung unabhängig von den Belichtungsbedingungen und der Helligkeit der Beleuchtung ist, vorausgesetzt das Bild ist nicht unter- oder überbelichtet. Über eine Auswerteroutine in der Software können auf dem Bild verteilt diverse Messfenster auf ihre Graustufen hin ausgewertet werden. In jedem Messfenster kann der Mittelwert der Grauwerte aller Pixel über die Messfläche inklusive der Standardabweichung gemessen und festgehalten werden. Mit anderen Worten können die Messwerte M₁, M₂ und die Messwerte der RAL-Karten als Mittelwerte über Messbereiche gebildet sein, wobei die Messbereiche jeweils mindestens eine Fläche von 0,2 cm², vorzugsweise 0,9 cm² aufweisen.

Basierend auf den gemessenen Messwerten M₁, M₂ und den Messwerten der beiden RAL-Karten, welche jeweils absolute Werte darstellen, werden prozentuale Grauwerte G₁ und G₂ berechnet. Mit anderen Worten, werden relative Kontraste in Prozent berechnet, um Messungen vergleichbar zu machen.

Dazu wird eine lineare Funktion G dadurch definiert, dass diese lineare Funktion dem Messwert, welcher der RAL-Karte mit RAL-Farbe 9017 entspricht, einen prozentualen Grauwert von 20 % zuordnet und dem Messwert, welcher der RAL-Karte mit RAL-Farbe 7012 entspricht prozentualen Grauwert von 90 % zuordnet. Mit anderen Worten werden die Messwerte der RAL-Karten 9017 als 20 % und 7012 als 90 % referenziert, worüber eine lineare Umrechnung für alle gemessenen Grauwerte definiert wird.

Mit der linearen Funktion G=G(M), welche absolute Messwerte in prozentuale Grauwerte umrechnet, werden die prozentualen Grauwerte G₁ und G₂ berechnet als G₁=G(M₁) und G₂=G(M₂).

Optional können in der Dunkelkammer auch zusätzlich weitere RAL-Karten vorgesehen sein, beispielsweise mit RAL-Farbe 9006 (weißaluminium) und/oder RAL-Farbe 7038 (achatgrau).

Die Differenz der beiden gemessenen prozentualen Grauwerte |G₁-G₂| ist ein Maß für den Dead-Front-Effekt. Es hat sich herausgestellt, dass Werte unterhalb von 5,0 % von dem menschlichen Auge kaum noch wahrnehmbar sind. Mit anderen Worten wird ein Dead-Front-Effekt erreicht. Für einen noch besseren Dead-Front-Effekt ist es bevorzugt, wenn die Grauwertdifferenz geringer ist als 3,5 %, noch bevorzugter geringer ist als 2,5 % und besonders bevorzugt geringer ist als 1,5 %. Zur Bestimmung dieser Werte wurde eine statistische Analyse mit unterschiedlichen Beobachtern durchgeführt.

Die bei dieser Messung durchgeführte Bewertung des Dead-Front-Effekts ist besonders schwierig zu erfüllen, da als Referenz eine weiße und eine schwarze Farbkarte verwendet werden, was dem maximal möglichen Kontrast entspricht. Trennelemente, die diese Anforderung erfüllen, haben also einen ausreichenden Dead-Front-Effekt sogar für Bauteile, die auf der dem Trennelement zugewandten Seite starke Helligkeitskontraste aufweisen. Dies können beispielsweise weiße oder hoch reflektierende elektronische Bauteile auf einer dunklen, beispielsweise dunkelgrünen Leiterplatte sein.

In einer bevorzugten Ausführungsform weist der erfindungsgemäße Gegenstand zwischen einem prozentualen Grauwert G₁, der dem gemessenen Grauwert einer Farbkarte der RAL-Farbe 9017 in Durchsicht durch das Trennelement entspricht, und einem prozentualen Grauwert G₂, der dem gemessenen Grauwert einer Farbkarte der RAL-Farbe 9003 in Durchsicht durch das Trennelement entspricht, ein Unterschied |G₁-G₂| von weniger als 5,0 %, bevorzugt von weniger als 3,5%, besonders bevorzugt von weniger als 2,5 % und ganz besonders bevorzugt von weniger als 1,5 % auf. Vorzugsweise wird diese Grauwertdifferenz bei einem Lichttransmissionsgrad des Trennelements im Bereich der Aussparung des Abdeckmittels von wenigstens 2 %, bevorzugt wenigstens 3 %, besonders bevorzugt wenigstens 4 %, ganz besonders bevorzugt wenigstens 5 % erreicht.

Eine weitere Möglichkeit den Dead-Front-Effekt zu quantifizieren, besteht darin, das Trennelement ohne das Abdeckmittel auf einen schwarzen und auf einen weißen Untergrund zu legen und für beide Untergründe wie ansonsten oben beschrieben den Farbort im CIELAB Farbraum zu messen. Aus den Messwerten kann der maximale Farbabstand $Δ E = \sqrt{{\left({L}_{schwarz}^{∗}-{L}_{wei ß}^{∗}\right)}^{2} + {\left({a}_{schwarz}^{∗}-{a}_{wei ß}^{∗}\right)}^{2} + {\left({b}_{schwarz}^{∗}-{b}_{wei ß}^{∗}\right)}^{2}}$ berechnet werden. Dabei wird vorzugsweise ein Farbabstand von ΔE < 10, bevorzugt < 5, besonders bevorzugt < 1 erzielt.

Dieser Wert hängt auch vom Lichttransmissionsgrad der Probe ab und nimmt mit zunehmendem Lichttransmissionsgrad zu. In einer bevorzugten Ausführungsform beträgt der Quotient von Farbabstand zu Lichttransmissionsgrad weniger als 1,5, bevorzugt weniger als 1, besonders bevorzugt weniger als 0,8 für einen Lichttransmissionsgrad von mehr als 1 %.

Noch eine weitere Möglichkeit den Dead-Front-Effekt zu quantifizieren, besteht darin, die spektrale Reflektivität R₁(λ) des Trennelements gegen einen weißen Hintergrund, beispielsweise mit RAL-Farbe 9003 und spektrale Reflektivität R₂(λ) des Abdeckmittels im Spektralbereich 400 bis 700 nm des Trennelements gegen einen schwarzen Hintergrund zu messen, beispielsweisemit RAL-Farbe 9017, beispielsweise mittels eines Lambda 850 UV/VIS Spektrophotometers der Firma PerkinElmer.

Aus den beiden gemessenen spektralen Reflektivitäten kann gemäß der Formel ${ρ}_{i} = \frac{{\int }_{{S}_{1}}^{{S}_{2}} {R}_{i} \left(λ\right) dλ}{{\int }_{{S}_{1}}^{{S}_{2}} dλ}$ mit S₁ = 400 nm und S₂ = 700 nm das Rückstrahlvermögen ρᵢ (i=1,2) berechnet werden. Der Unterschied der Rückstrahlvermögen |ρ₁- ρ₂| beträgt in einer bevorzugten Ausführungsform weniger als 3 %, bevorzugt weniger als 1,5 %.

In einer bevorzugten Ausführungsform, weist das Glaskeramiksubstrat im Bereich des Leuchtelements eine zur Erhöhung der Lichtqualität angepasste Oberflächenqualität auf. Beispielsweise kann die dem Außenbereich des erfindungsgemäßen Gegenstandes zugewandte Seite poliert sein und somit eine sehr geringe Oberflächenrauheit aufweisen, wodurch in vorteilhafter Weise die Streuung des von der Anzeigeeinrichtung emittierten Lichtes an dieser Oberfläche minimiert wird. Auf diese Weise können mit beispielsweise leuchtende Symbole oder Siebensegmentanzeigen mit besonders hoher Kantenschärfe erzielt werden.

Alternativ kann es auch vorteilhaft sein, die dem Außenbereich zugewandte Oberfläche beispielsweise mittels Walzen, Ätzen oder einer Anti-Glare-Beschichtung gezielt zu strukturieren, um den Anteil des gestreuten Lichts zu erhöhen. Dies kann den Vorteil haben, Reflexionen an der Außenseite zu minimieren und somit eine bessere Sichtbarkeit des vom Leuchtelement emittierten Lichtes zu ermöglichen, insbesondere bei hellem und gerichtetem Umgebungslicht mit geringem diffusen Anteil.

In einer weiteren bevorzugten Ausführungsform ist das Glaskeramiksubstrat zumindest im Bereich des Leuchtelements so optimiert, dass es eine möglichst geringe Streuung für sichtbares Licht verursacht. Hierzu zählt beispielsweise, dass das Substrat weniger als 3 Blasen pro kg Glaskeramik, bevorzugt weniger als 2 Blasen pro kg, besonders bevorzugt weniger als 1 Blase pro kg, bezogen auf eine Blasengröße von mindestens 100 µm im Durchmesser aufweist. Darüber hinaus ist es vorteilhaft, wenn das Substrat aus Glaskeramik besteht, dass es eine möglichst niedrige intrinsische Lichtstreuung an den enthaltenen Kristalliten aufweist. Dies ist insbesondere dann der Fall, wenn die Kristallite eine durchschnittliche Größe von weniger als 250 nm im Durchmesser aufweisen und der Brechzahlunterschied zwischen kristalliner Phase und Restglasphase möglichst gering ist. Beide Parameter können durch die Wahl der Materialzusammensetzung und die Keramisierungsbedingungen, insbesondere die Steigung der Temperaturrampen, Dauer der Keramisierung und maximale Temperatur während der Keramisierung stark beeinflusst werden. Bevorzugt weisen Glaskeramiksubstrate deshalb Hochquarz-Mischkristalle als Hauptkristallphase.

Bevorzugt weist das Trennelement im sichtbaren Spektralbereich einen Haze von höchstens 5 %, bevorzugt höchstens 2 %, besonders bevorzugt höchstens 1 % auf. Unter dem Haze ist dabei gemäß der Norm ASTM D1003, der Anteil des durch eine Probe transmittierten Lichts zu verstehen, der durch Streuung um einen Winkel von mehr als 2,5 ° gegenüber der optischen Achse des auf die Probe eingestrahlten Lichts der Lichtart CIE-C abgelenkt wird. Der Haze kann beispielsweise mit dem Messgerät haze-gard der Firma BYK gemäß der Norm ASTM D1003 gemessen werden. Bei einem Haze von höchstens 5 % ist eine besonders gute Sichtbarkeit der Anzeigeeinrichtung gewährleistet.

Alternativ oder ergänzend weist das Trennelement vorzugsweise eine Clarity im sichtbaren Spektralbereich von mindestens 90 %, bevorzugt mindestens 95 %, ganz besonders bevorzugt mindestens 98% auf. Unter der Clarity ist dabei gemäß der Norm ASTM D1003, der Anteil des durch eine Probe transmittierten Lichts zu verstehen, der durch Streuung um einen Winkel von weniger oder gleich 2,5 ° gegenüber der optischen Achse des auf die Probe eingestrahlten Lichts der Lichtart CIE-C abgelenkt wird. Die Clarity kann beispielsweise mit dem Messgerät haze-gard der Firma BYK gemäß der Norm ASTM D1003 gemessen werden.

Ausführungsbeispiele von transparenten eingefärbten Glaskeramiken die für die Verwendung in erfindungsgemäßen Gegenständen geeignet sind, sowie Vergleichsbeispiele sind in den Tabellen 1 bis 4 angegeben.

Die Tabellen 1 und 3 zeigen die Grundzusammensetzungen kristallisierbarer Gläser und deren Eigenschaften im glasigen Zustand, also vor der Keramisierung.

Die Tabelle 2 enthält im Bereich "Dotierungen" die im jeweiligen Ausgangsglas enthaltenen Färbezusätze sowie einige ausgewählte Eigenschaften der resultierenden Glaskeramiken. Alle Beispiele in Tabelle 2 basieren auf der Grundzusammensetzung des Glases in Tabelle 1.

Die Tabelle 4 enthält einige ausgewählte Eigenschaften der resultierenden Glaskeramiken. Diese basieren auf den Grundzusammensetzungen der Gläser in Tabelle 3.

Die Tabelle 5 enthält einige ausgewählte Eigenschaften von transparenten, nicht eingefärbten Glaskeramiken mit Molybdän-Silizium-Cermet-Beschichtungen.

Tabelle 1 zeigt eine Grundzusammensetzung für kristallisierbare Gläser und ihre Eigenschaften. Die Grundzusammensetzung Basisglas 1 entspricht bis auf die farbgebenden Bestandteile dem Vergleichsglas 1 nach dem Stand der Technik außerhalb der Erfindung. In Tabelle 1 sind auch die Eigenschaften im glasigen Zustand Transformationstemperatur Tg [°C], Verarbeitungstemperatur VA [°C], 102-Temperatur [°C] und obere Entglasungsgrenze OEG [°C] aufgeführt. Zur Messung der OEG werden die Gläser in Pt/Rh10-Tiegeln geschmolzen. Anschließend werden die Tiegel für 5 Stunden bei verschieden Temperaturen im Bereich der Verarbeitungstemperatur gehalten. Die oberste Temperatur, bei der die ersten Kristalle an der Kontaktfläche der Glasschmelze zur Tiegelwand auftreten, bestimmt die OEG.

Den Gemengerohstoffen dieser Grundzusammensetzung werden unterschiedliche Gehalte färbender Verbindungen zugesetzt und neue Gläser geschmolzen. Durch Zusatz der Komponente MoOs werden erfindungsgemäße Zusammensetzungen erhalten. Die so erhaltenen Gläser in Tabelle 2 haben die Grundzusammensetzung von Glas 1 und unterscheiden sich nur in den angegebenen färbenden Verbindungen und optional reduzierenden Zusätzen. Sie werden mit den in der Tabelle 2 aufgeführten Keramisierungsprogrammen kristallisiert. Die Transmissions-Eigenschaften der erhaltenen Glaskeramiken sind aufgeführt. Auch die mit Röntgenbeugung gemessene Hauptkristallphase ist aufgeführt.

Dabei handelt es sich bei den Beispielen 1 und 2 um Vergleichsbeispiele aus dem Stand der Technik (WO/2010/102859 A1), mit einem V₂O₅-Gehalt von 0,023 Gew.-%, die aus dem Glas 1 mit unterschiedlichen Programmen keramisiert wurden.

Das erfindungsgemäßen Beispiele 3 und 4 enthalten weniger als 0,015 Gew.-% V₂O₅. Im Vergleich zu den V₂O₅ freien Beispielen verschieben Bsp. 3 und 4 Licht der Normlichtart D65 stärker in Richtung rot, nämlich zu x-Koordinaten >0,4. Im Gegensatz zu den Vergleichsbeispielen 1 und 2 liegt der Wert aber noch im Bereich x < 0,5. Licht das durch die Glaskeramik der Beispiele 3 und 4 bei einer Dicke von 4 mm transmittiert wird, liegt im Weißbereich W1, aber aufgrund des V₂O₅-Gehalts nicht innerhalb des Weißbereichs W2.

Ebenfalls im Weißbereich W1 aber nicht im Weißbereich W2 liegt Bsp. 17 aus Tabelle 2, aufgrund des Gehalts von 0,02 Gew.-% CoO. Darüber hinaus liegen die Beispiele 19 und 20 zwar innerhalb des Weißbereichs W2 aber nicht innerhalb des Weißbereichs W3.

Die Vergleichsglaskeramik 15 aus Tabelle 2 enthält zwar kein V₂O₅, liegt aber aufgrund des Gehalts an Cr₂O₃ von 0,02 Gew.-% nicht innerhalb des Weißbereichs W1.

Tabelle 3 zeigt die Zusammensetzungen weiterer kristallisierbarer Gläser und ausgewählte Eigenschaften. Dabei entspricht das Vergleichsglas 13 mit seiner Zusammensetzung der Glaskeramik KeraVision^{®} der Firma EuroKera. Das mit Fe, V, Mn und Co dotierte Glas erreicht nach Umwandlung in die Vergleichsglaskeramik 18 (Tabelle 4) nicht die erfindungsgemäße geringe Farbe, insbesondere liegt durch eine solche Glaskeramik transmittiertes Licht nicht mehr innerhalb des Weißbereichs W1 und ist deshalb nicht für die Verwendung in einem erfindungsgemäßen Gegenstand geeignet.

Keramisierungsprogramm 1 (Keramisierungszeit 96 min):
a) Aufheizen innerhalb von 23 Minuten von Raumtemperatur auf 680°C;
b) Temperaturerhöhung von 680 auf 800°C innerhalb von 19 min, dabei Aufheizen mit 10°C/min auf 730°C, weiteres Aufheizen mit 5°C/min auf 800°C;
c) Temperaturerhöhung von 800°C auf 918°C innerhalb von 24 min und Haltezeit 10 min bei Maximaltemperatur
d) Abkühlen auf 800°C innerhalb 20 min, dann schnelle Abkühlung auf Raumtemperatur.

Bei dem Keramisierungsprogramm 2 ist die Keramisierungszeit verkürzt.

Keramisierungsprogramm 2 (Keramisierungszeit 68 min):
a) schnelles Aufheizen von Raumtemperatur auf 740 °C in 26 min,
b) Temperaturerhöhung von 740 bis 825 °C in 18 min
   (Heizrate 4,7 °C/min),
c) Temperaturerhöhung von 825 °C bis 930 °C in 4 min (Heizrate 26 °C/min), Haltezeit von 4 min bei Maximaltemperatur,
d) Abkühlen auf 800°C innerhalb 16 min, dann schnelle Abkühlung auf Raumtemperatur.

Alle Beispiele weisen als Hauptkristallphase Hochquarz-Mischkristall (HQMK) auf.

Die thermische Ausdehnung der Glaskeramiken mit Hochquarz-Mischkristall als Hauptkristallphase liegt bei 0 ± 0,5 •10⁻⁶/K im Bereich von 20-700°C, entspricht also den Anforderungen für temperaturstabile Glaskeramiken.

Die Transmissionsmessungen wurden an polierten Platten mit dem Gerät PerkinElmer Lambda 900 durchgeführt. Die Transmission wurde an Proben mit einer Dicke von 3,5 bis 4,1 mm bestimmt und auf eine Dicke von 4 mm umgerechnet. Spektrale Transmissionsgrade sind für ausgewählte Wellenlängen angegeben. Aus den gemessenen spektralen Werten im Bereich zwischen 380 nm und 780 nm, der das sichtbare Lichtspektrum repräsentiert, werden die Helligkeit L* und die Farbkoordinaten a*, b* im CIELAB-Farbsystem und die Helligkeit (brightness) Y sowie Farbkoordinaten x, y nach DIN 5033 im CIE-Farbsystem für die gewählte Normlichtart und Beobachterwinkel 2° berechnet. Die Helligkeit Y entspricht dabei dem Lichttransmissionsgrad nach DIN EN 410. Die Buntheit c* und der Farbabstand d von Licht der Normlichtart D65 nach der Transmission durch eine 4 mm Dicke Probe zu den ursprünglichen Farbkoordinaten von Licht der Normlichtart D65 (x = 0,3127 und y = 0,3290) ist angegeben. Dieser wurde wie folgt berechnet: $d = \sqrt{{\left(x-0,3127\right)}^{2} + {\left(y-0,3290\right)}^{2}} .$

Die erfindungsgemäßen Glaskeramiken, also solche die für die Verwendung als Substrat in einem erfindungsgemäßen Gegenstand geeignet sind, weisen Farbabstände von ca. 0,03 bis 0,14 auf und verschieben transmittiertes Licht folglich deutlich weniger als die Vergleichsbeispiele.

Aus dem Verlauf der Transmissionskurve im Bereich von 470 bis 630 nm wurde die Flachheit der Transmission berechnet (Quotient aus höchstem zu niedrigstem Transmissionswert in diesem Bereich). Die Wellenlängen für den maximalen und minimalen Transmissionswert sind ebenfalls angegeben. Die Werte sind für 4 mm dicke polierte Proben angegeben.

Die Streuung der Glaskeramiken wird durch Messung der Trübung (engl. Haze) bestimmt. Dabei werden beidseitig polierte 3,5-4,1 mm dicke Proben mit einem kommerziellen Messgerät "haze-guard plus" der Firma BYK Gardener (Norm ASTM D1003-13) mit Normlicht C gemessen. Die Streuung wird durch den Haze-Wert in den Tabellen charakterisiert.

Ergänzend wird an den Proben eine visuelle Begutachtung mit einer handelsüblichen weißen LED vom Typ 7-Segmentanzeige (Hersteller opto devices, Typ OS39D3BWWA) vorgenommen. Die polierten Glaskeramikproben wurden mit einem Abstand von 1 mm auf die weiße LED gelegt und von oben mit einem Abstand von 31 cm im gesamten Winkelbereich, d. h. senkrecht bis streifend zur Glaskeramikoberfläche betrachtet. Abhängig von der Helligkeit der Glaskeramikprobe wird die Leuchtdichte der weißen LED in diesem Abstand senkrecht zur Glaskeramikplatte auf 60 cd/m² geregelt, bzw. bei sehr dunklen Glaskeramikproben Y < 0,5 % mit maximaler Leistung betrieben. Um den Einfluss von Fremdlicht auszuschließen, wird die Bewertung in einer Dunkelkammer mit geringer Umgebungsbeleuchtung von ca. 4 lux vorgenommen. Diese Bedingungen bedeuten für ein Kochfeld eine sehr kritische Einbau- und Beleuchtungssituation.

Dabei bedeuten die visuellen Bewertungen in den Tabellen (1=keine Streuung wahrnehmbar, 2=geringe, aber tolerierbare Streuung, 3=sichtbare Streuung, erfordert zusätzlichen Aufwand für die Gestaltung des Kochfeldes, 4=deutliche störende Streuung, nicht tolerierbar). Bewertungen ab Stufe 4 sind nicht zulässig und solche ab Stufe 3 bevorzugt zu vermeiden. Keines der Beispiele hat in diesem Test eine visuell auffällige Streuung gezeigt.

Die Beispiele B1 und B2 in Tabelle 5 zeigen zwei Beispiele für MoSiOₓ-Cermet-Beschichtungen auf Glaskeramiksubstraten. Als Substrat wurde für diese Schichten eine 4 mm dicke, nicht eingefärbte, transparente LAS-Glaskeramik des Typs CERAN CLEARTRANSO der Firma SCHOTT AG verwendet.

Bei diesen Beschichtungen handelt es sich um MoSiOₓ-Cermets mit Molybdän (Mo) als metallische Komponente in einer SiOₓ-Matrix. Das Verhältnis von Mo zu Si in Gew.-% in der Beschichtung liegt bei beiden im Bereich von 10:90 Mo:Si bis 50:50 Mo:Si. Beiden Schichten bewirken einen schwarzen Farbeindruck mit einem in Remission gemessenen Farbort im Bereich 27 < L* <30, -1 < a* < 1, -1 < b* < 1. Die Farbort von Normlicht der Lichtart D65 nach Durchtritt durch die Beschichtungen und das Substrat liegt jeweils im Weißbereich W1. Die Helligkeit Y, die dem Lichttransmissionsgrad entspricht, liegt bei 2,6 bzw. 2,9 %. Beide Beschichtungen weisen im sichtbaren Spektralbereich einen flachen Transmissionsverlauf auf. Die Beispiele weisen trotz der niedrigen Transmission im sichtbaren Spektralbereich eine hohe Transmission im Infraroten auf. Insbesondere bei Wellenlängen >1500 nm weisen sie eine Transmission von mehr als 40,0% auf. Sie sind somit beispielsweise für die Verwendung mit einer Vielzahl unterschiedlicher optischer Sensoren geeignet. Zu solchen Sensoren zählen insbesondere die oben beschriebenen Detektoren und Sensoren.

Beide Schichten weisen einen Widerstand von mehr als 20 MOhm auf. Somit sind sie sehr gut für die Verwendung mit kapazitiven und induktiven Sensoren oder Induktionsheizelementen geeignet.

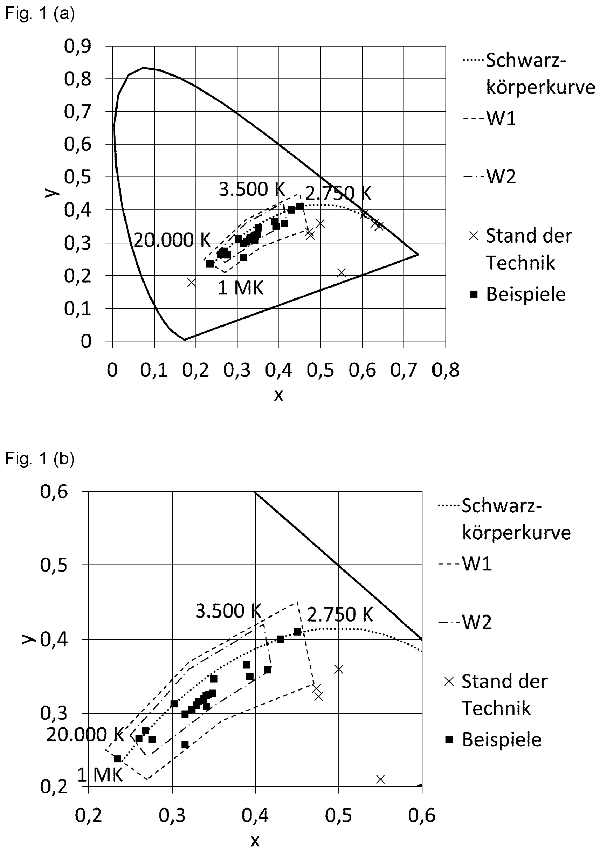

Die Figur 1 (a) zeigt ein Chromatizitätsdiagramm des Farbraums CIExyY mit 2° Normalbeobachter (CIExyY-2°). Die Figur 1 (b) zeigt einen vergrößerten Ausschnitt dieser Darstellung.

In den Abbildungen sind die Schwarzkörperkurve als gepunktete Linie, die beiden Weißbereiche W1 und W2 als gestrichelte Linien, die Farbkoordinaten der in den Tabellen 2 und 4 aufgeführten, für die Verwendung in einem erfindungsgemäßen Gegenstand geeigneten Beispiele als schwarze Quadrate und Beispiele aus dem Stand der Technik als schwarze Kreuze abgebildet.

Jeder Punkt auf der Schwarzkörperkurve entspricht dem Farbort des von einem Schwarzkörperstrahler emittierten Lichts bei einer definierten Temperatur, der sogenannten Farbtemperatur. Dieser Kurve kommt für die Wahrnehmung des Menschen eine besondere Rolle zu, da die Sonne ebenfalls einem Schwarzkörperstrahler entspricht und somit die Farbe von Sonnenlicht auf der Schwarzkörperkurve liegt. Je nach Stand der Sonne verschiebt sich der Farbort zwischen kühleren und wärmeren Farborten, dabei entspricht eine Farbtemperatur von 20.000 K einem klaren Himmel und eine Temperatur von 3.500 K einer Abendsonne kurz vor Beginn der Dämmerung. Farborte auf oder in der Nähe der Schwarzkörperkurve werden deshalb als Weiß und besonders natürlich wahrgenommen.

Der dargestellte Stand der Technik besteht teilweise aus den in der WO 2012076414 A1 genannten Glaskeramiktypen und teilweise aus kommerziell erhältlichen Glaskeramiken der Firmen SCHOTT AG und Eurokera. Diese Beispiele aus dem Stand der Technik liegen alle außerhalb des Weißbereichs W1. Wie aus der WO 2012076414 A1 bekannt ist, kann der Weißbereich W1 mit diesen Glaskeramiken nur durch die Verwendung zusätzlicher, aufwändiger Kompensationsfilter erschlossen werden. Die erfindungsgemäßen Beispiele decken diesen Bereich jedoch auch ohne einen solchen Filter ab. Alle dargestellten Farborte beziehen sich auf eine Materialstärke von 4 mm.

Die aus den Tabellen 2, und 4 übernommenen Beispiele liegen alle innerhalb des Weißbereichs W1. Von diesen liegen alle Beispiele, die weniger als 0,01 Gew.-% V₂O₅ in der Glaskeramik enthalten und bis auf das Beispiel 17, dass 0,02 Gew.-% CoO enthält, auch innerhalb des Weißbereichs W2. Deshalb umfasst das Trennelement bevorzugt Glaskeramiken, die kein V₂O₅ und CoO enthalten.

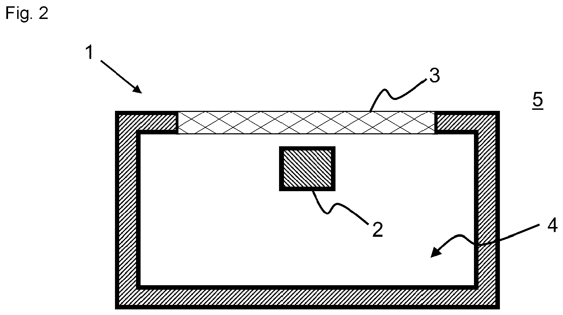

Fig. 2 enthält eine schematische Darstellung eines erfindungsgemäßen Gegenstands im Querschnitt. Der dargestellte Einrichtungs- oder Ausstattungsgegenstand (1) für eine Küche oder ein Labor umfasst ein Leuchtelement (2) und ein Trennelement (3), das Abschnittsweise einen Innenbereich (4) des Gegenstandes (1) von einem Außenbereich (5) abtrennt. Das Leuchtelement (2) im Innenbereich (4) des Gegenstandes (1) ist so angeordnet, dass das von dem Leuchtelement (2) ausgesandte Licht durch einen Abschnitt des Trennelements (3) hindurchtritt und von einem Benutzer im Außenbereich (5) des Gegenstandes (1) wahrnehmbar ist. In der dargestellten Ausführungsform besteht das Trennelement (3) aus einem Glaskeramiksubstrat mit einem thermischen Ausdehnungskoeffizienten CTE von 2,5 bis 2,5 × 10-6/K im Temperaturbereich zwischen 20 °C und 300 °C. Zusätzlich weist das Trennelement (3) einen Lichttransmissionsgrad von wenigstens 0,1 % und von weniger als 12 % und einen Farbort im CIELAB-Farbraum mit den Koordinaten L* von 20 bis 40, a* von -6 bis 6 und b* von -6 bis 6 auf. Der Farbort von Licht der Normlichtart D65 liegt nach Durchtritt durch das Trennelement (3) innerhalb des Weißbereichs W1.

Erfindungsgemäße Einrichtungs- oder Ausstattungsgegenstände für Küchen oder Labore können in ihrem Innenbereich neben dem Leuchtelement noch eine Vielzahl weitere Bauteile und Komponenten enthalten.

Die Gegenstände können beispielsweise ein oder mehrere Heizelemente zum Aufheizen eines Gegenstandes, beispielsweise eines Topfes, im Außenbereich oder auch im Innenbereich des Gegenstandes aufweisen. Dies können insbesondere Strahlungsheizelemente, Induktionsheizelemente, Gasheizlemente oder Mikrowellengeneratoren sein.

Die Gegenstände können zusätzlich Anzeigeelemente, wie LCD- oder OLED-Bildschirme oder Videoprojektoren, und andere Leuchtelemente wie Punkt-, Linien- oder Flächenlichtquellen aufweisen. Dazu zählen beispielsweise LEDs, Lichtfasern und OLEDs. Diese Lichtquellen können mit einer bestimmten Farbe, insbesondere weiß, rot, grün und/oder blau leuchten oder auch mit veränderlichen Farben. Zwischen diesen Leuchtelementen und dem Trennelement können zusätzliche Farbfilter vorgesehen sein, beispielsweise um eine weiße LED zur Erzeugung einer farbigen Lichterscheinung mit einem definierten Farbort und hoher Farbsättigung nutzen zu können.

Leuchtelemente können insbesondere auch im Heißbereich in der Nähe von Heizelementen angeordnet sein. Hierbei ist insbesondere für die Erzeugung von weißen Leuchterscheinungen im Außenbereich des Gegenstandes von Vorteil, dass keine temperaturempfindlichen Schwarzkörperkompensationsfilter benötigt werden.

Die Gegenstände können Kühlaggregate, beispielsweise Peltierelemente, in thermischem Kontakt mit dem Trennelement aufweisen, um an der dem Außenbereich zugewandten Seite des Trennelements eine Kühlfläche, beispielsweise zur Kühlung von Lebensmitteln oder Chemikalien, zu erzeugen.

Der Gegenstand kann diverse Sensoren aufweisen, beispielsweise kapazitive Berührungssensoren zur Steuerung oder Infrarotsensoren zur Gestensteuerung oder zur Messung der Temperatur von heißen Gegenständen im Außenbereich, beispielsweise heißen Töpfen. Weiterhin kann der Gegenstand Mikrophone und Kameras, beispielsweise zur Sprachsteuerung oder Benutzererkennung und - authentifizierung aufweisen. Dies kann beispielsweise in Laboren besonders vorteilhaft sein, falls der Gegenstand nur von entsprechend geschulten Personen verwendet werden darf. Solche Sensoren können auf die Innenseite des Trennelements aufgedruckt, angepresst, gebondet, aufgeklebt oder in sonstiger Weise angeordnet sein. Dies gilt insbesondere für Berührungssensoren.

Der Gegenstand kann verschiedene Schnittstellen zur Kommunikation aufweisen, beispielsweise WLAN-, Bluetooth-, oder NFC-Module oder Infrarotschnittstellen. Über solche Schnittstellen kann der Gegenstand beispielsweise entweder mit dem Internet oder mit anderen Gegenständen in seiner Nähe, beispielsweise Töpfen mit entsprechender Schnittstelle oder anderen elektronischen Geräten, verbunden sein. Insbesondere kann es zur Steuerung und Kommunikation mit einem mobilen elektronischen Gerät, wie einem Mobiltelefon oder einem Tablet, verbunden sein.

Der Gegenstand kann eine Vorrichtung zur kabellosen Energieübertragung von Gegenständen im Außenbereich, insbesondere mittels Induktionsspulen und nach dem Qi-Standard, enthalten.

Das Trennelement kann auf der dem Außenbereich zugewandten Seite Beschichtungen aufweisen, beispielsweise Kratzschutz-Schichten, Antireflex-Schichten, Anti-Glare-Schichten, Dekor-Schichten, einfach zu reinigende Schichten oder Infrarot-reflektierende Schichten, solange diese die wesentlichen optischen Eigenschaften des Trennelements nicht verändern.

Das Trennelement kann Aussparungen aufweisen, beispielsweise Ausschnitte für Spülbecken oder Down-Draft-Dunstabzüge oder Durchführungen für Rohrleitungen.

Ebenfalls optional kann das Trennelement eine Kantenbearbeitung aufweisen, beispielsweise eine Facette oder einen C-Schliff.

Alle diese Bestandteile können einzeln oder in Kombination vorliegen.

**Tabelle 1: Zusammensetzung und Eigenschaften des kristallisierbaren Basisglases 1 mit Grundzusammensetzung.**

| **Glas Nr.** | | **1** |
|---|---|---|
| **Zusammensetzung** | Gew.% | |
| Li₂O | | 3,80 |
| Na₂O | | 0,60 |
| K₂O | | 0,25 |
| MgO | | 0,29 |
| CaO | | 0,40 |
| SrO | | 0,02 |
| BaO | | 2,23 |
| ZnO | | 1,53 |
| Al₂O₃ | | 20,9 |
| SiO₂ | | 65,0 |
| TiO₂ | | 3,10 |
| ZrO₂ | | 1,38 |
| P₂O₅ | | 0,09 |
| SnO₂ | | 0,25 |
| As₂O₃ | | 0 |
| MnO₂ | | 0,025 |
| | | |
| H₂O - Gehalt (β-OH) | mm⁻¹ | 0,39 |
| | | |

| **Eigenschaften glasig** | | |
|---|---|---|
| Transformationstemperatur T_{g} | °C | 662 |
| 10² - Temperatur | °C | 1742 |
| Verarbeitungstemperatur V_{A} | °C | 1306 |
| OEG-Temperatur | °C | 1260 |

**Tabelle 2: Dotierungen und Eigenschaften der erfindungsgemäßen Glaskeramiken und Vergleichsglaskeramiken 1**

| **Beispiel Nr.** | | **1** | **2** | **3** | **4** | **5** |
|---|---|---|---|---|---|---|
| Glas Nr. | | 1 | 1 | 2 | 3 | 4 |
| Basisglas | | 1 | 1 | 1 | 1 | 1 |

| **Dotierungen (Gew.-%)** | | | | | | |
|---|---|---|---|---|---|---|
| Fe₂O₃ | | 0,090 | 0,090 | 0,120 | 0,088 | 0,088 |
| V₂O₅ | | 0,023 | 0,023 | 0,010 | 0,013 | |
| MoO₃ | | | | 0,057 | 0,046 | 0,170 |
| MnO₂ | | 0,025 | 0,025 | 0,025 | 0,025 | 0,025 |
| Cr₂O₃ | | | | | | |
| CeO₂ | | | | | | |
| WO₃ | | | | | | |
| Zusatz Gemenge | | | | | | |
| **Keramisierung** | # | 1 | 2 | 1 | 1 | 1 |

| **Eigenschaften keramisiert** | | | | | | |
|---|---|---|---|---|---|---|
| **Transmission 4 mm Dicke Normlicht D65,2°** | | | | | | |
| 470 nm | % | 1,2 | 0,7 | 2,9 | 2,4 | 2,7 |
| 630 nm | % | 9,9 | 6,6 | 12,6 | 9,5 | 3,9 |
| 950 nm | % | 73,0 | 71,9 | 66,5 | 67,7 | 45,0 |
| 1600 nm | % | 76,4 | 76,3 | 70,9 | 75,7 | 70,3 |
| 3700 nm | % | 52,0 | 51,1 | 50,0 | 53,2 | 50,4 |

| **Farbkoordinaten (CIExyY) in Transmission** | | | | | | |
|---|---|---|---|---|---|---|
| x | | 0,502 | 0,517 | 0,447 | 0,436 | 0,348 |
| y | | 0,367 | 0,358 | 0,365 | 0,351 | 0,327 |
| Helligkeit Y | % | 3,6 | 2,2 | 5,8 | 4,4 | 2,6 |
| Farbabstand d | | 0,193 | 0,207 | 0,139 | 0,125 | 0,035 |

| **Farbkoordinaten (CIELab) in Remission** | | | | | | |
|---|---|---|---|---|---|---|
| L* | | 25,19 | 24,99 | 25,74 | 25,54 | 25,37 |
| a* | | 0,28 | 0,04 | 0,39 | 0,47 | -0,13 |
| b* | | -0,66 | -0,78 | 0,80 | -0,54 | -1,05 |
| c* | | 0,72 | 0,78 | 0,89 | 0,72 | 1,06 |
| ΔE | | 4,26 | 0,68 | 5,58 | 6,54 | 0,29 |
| ΔG | % | | | 16,9 | 8,1 | 0,9 |
| **Flachheit Transmission** (Wellenlänge bei Max./Min.) | nm | 8,4 | 10,0 | 4,4 | 4,0 | 1,7 |
| | | 630/470 | 630/470 | 630/470 | 630/470 | 630/538 |

| **Streuung 4 mm Dicke Normlicht D65,2°** | | | | | | |
|---|---|---|---|---|---|---|
| Visuelle Bewertung | | 1 | 1 | 1 | 1 | 1 |
| Haze | % | 0,8 | 0,5 | 1,5 | 1,5 | 1,1 |

| **Röntgenbeugung** | | | | | | |
|---|---|---|---|---|---|---|
| Hauptkristallphase | | HQMK | HQMK | HQMK | HQMK | HQMK |

| **Thermische Ausdehnung [10⁻⁶/K]** | | | | | | |
|---|---|---|---|---|---|---|
| CTE α_{20/300} | | -0,26 | -0,29 | | | |
| CTE α_{20/700} | | 0,13 | 0,17 | | | |

| **Beispiel Nr.** | | 6 | 7 | 8 | 9 | |
|---|---|---|---|---|---|---|
| **Glas Nr.** | | 5 | 5 | 6 | 6 | |
| **Basisglas** | | 1 | 1 | 1 | 1 | |

| **Dotierungen (Gew-%)** | | | | | | |
|---|---|---|---|---|---|---|
| Fe₂O₃ | | 0,088 | 0,088 | 0,062 | 0,062 | |
| V₂O₅ | | | | | | |
| MoO₃ | | 0,170 | 0,170 | 0,150 | 0,150 | |
| MnO₂ | | 0,025 | 0,025 | 0,025 | 0,025 | |
| Cr₂O₃ | | | | | | |
| CeO₂ | | | | | | |
| WO₃ | | | | | | |
| Zusatz Gemenge | | 50% Scherben | 50% Scherben | | | |
| Keramisierung | # | 1 | 2 | 1 | 2 | |

| **Eigenschaften keramisiert** | | | | | | |
|---|---|---|---|---|---|---|
| **Transmission 4 mm Dicke Normlicht D65,2°** | | | | | | |
| 470 nm | % | 2,3 | 2,0 | 1,2 | 1,5 | |
| 630 nm | % | 3,9 | 2,3 | 1,9 | 1,6 | |
| 950 nm | % | 41,5 | 35,3 | 36,7 | 34,2 | |
| 1600 nm | % | 69,8 | 68,5 | 71,5 | 70,9 | |
| 3700 nm | % | 51,8 | 52,0 | 52,4 | 52,4 | |

| **Farbkoordinaten (CIExyY) in Transmission** | | | | | | |
|---|---|---|---|---|---|---|
| x | | 0,338 | 0,329 | 0,323 | 0,315 | |
| y | | 0,318 | 0,311 | 0,305 | 0,299 | |
| Helligkeit Y | % | 2,0 | 1,6 | 1,4 | 1,2 | |
| Farbabstand d | | 0,028 | 0,024 | 0,026 | 0,030 | |

| **Farbkoordinaten (CIELab) in Remission** | | | | | | |
|---|---|---|---|---|---|---|
| L* | | | 24,99 | 25,91 | 24,98 | |
| a* | | | -0,03 | 0,03 | -0,02 | |
| b* | | | -0,77 | -0,79 | -0,78 | |
| c* | | | 0,77 | 0,79 | 0,78 | |
| ΔE | | | 0,06 | 0,06 | 0,03 | |
| ΔG | % | 0,7 | 0,4 | 0,7 | 0,5 | |
| Flachheit Transmission (Wellenlänge bei Max./Min.) | | 2,2 | 1,6 | 1,6 | 1,5 | |
| | nm | 630/545 | 630/552 | 630 /553 | 630 /558 | |

| **Streuung 4 mm Dicke Normlicht D65,2°** | | | | | | |
|---|---|---|---|---|---|---|
| Visuelle Bewertung | | 1 | 1 | 1 | 1 | |
| Haze | % | 0,4 | 2,3 | 0,5 | 3,1 | |

| **Röntgenbeugung** | | | | | | |
|---|---|---|---|---|---|---|
| Haze | % | 0,4 | 2,3 | 0,5 | 3,1 | |
| Hauptkristallphase | \| | HQMK | HQMK | HQMK | HQMK | |

| **Beispiel Nr.** | | **10** | **11** | **12** | **13** | **14** |
|---|---|---|---|---|---|---|
| **Glas Nr.** | | **7** | **7** | **8** | **9** | **9** |
| **Basisglas** | | **1** | **1** | **1** | **1** | **1** |

| **Dotierungen** (Gew.-%) | | | | | | |
|---|---|---|---|---|---|---|
| Fe₂O₃ | | 0,062 | 0,062 | 0,061 | 0,062 | 0,062 |
| V₂O₅ | | | | | | |
| MoO₃ | | 0,150 | 0,150 | 0,150 | 0,040 | 0,040 |
| MnO₂ | | 0,023 | 0,023 | 0,023 | 0,025 | 0,025 |
| CeO₂ | | 0,060 | 0,060 | | | |
| WO₃ | | | | 0,050 | | |
| Zusatz Gemenge | | | | | 0,2% Zucker ohne Nitrat | 0,2% Zucker ohne Nitrat |
| **Keramisierung** | # | 1 | 2 | 1 | 1 | 2 |

| **Eigenschaften keramisiert** | | | | | | |
|---|---|---|---|---|---|---|
| **Transmission 4 mm Dicke Normlicht D65,2°** | | | | | | |
| 470 nm | % | 2,6 | 2,3 | 2,4 | 4,8 | 4,2 |
| 630 nm | % | 3,4 | 2,8 | 2,9 | 2,8 | 2,2 |
| 950 nm | % | 44,5 | 41,8 | 41,6 | 32,1 | 28,9 |
| 1600 nm | % | 73,7 | 73,1 | 73,3 | 75,7 | 74,7 |
| 3700 nm | % | 52,0 | 51,8 | 51,9 | 50,6 | 50,5 |

| **Farbkoordinaten (CIExyY) in Transmission** | | | | | | |
|---|---|---|---|---|---|---|
| x | | 0,341 | 0,331 | 0,329 | 0,268 | 0,260 |
| y | | 0,324 | 0,316 | 0,311 | 0,276 | 0,266 |
| Helligkeit Y | % | 2,4 | 2,0 | 2,1 | 3,0 | 2,5 |
| Farbabstand d | | 0,028 | 0,023 | 0,024 | 0,069 | 0,082 |

| **Farbkoordinaten (CIELab) in Remission** | | | | | | |
|---|---|---|---|---|---|---|
| L* | | 25,94 | 25,06 | 25,97 | 25,92 | 25,12 |
| a* | | -0,03 | -0,02 | -0,05 | -0,02 | 0,01 |
| b* | | -0,76 | -0,76 | -0,76 | -0,89 | -0,93 |
| c* | | 0,76 | 0,76 | 0,76 | 0,89 | 0,93 |
| ΔE | | 0,12 | 0,1 | 0,09 | 0,24 | 2,11 |
| ΔG | % | 1,0 | 0,7 | 0,9 | 1,3 | 0,8 |
| **Flachheit Transmission** (Wellenlänge bei Max./Min.) | nm | 1,6 | 1,6 | 1,6 | 1,8 | 2,0 |
| | | 630/542 | 630/549 | 630/545 | 470/594 | 470/601 |

| **Streuung 4 mm Dicke Normlicht D65,2°** | | | | | | |
|---|---|---|---|---|---|---|
| Visuelle Bewertung | | 1 | 1 | 1 | 1 | 1 |
| Haze | % | 0,5 | 1,0 | 1,0 | 0,8 | 2,1 |

| **Röntgenbeugung** | | | | | | |
|---|---|---|---|---|---|---|
| Hauptkristallphase | | HQMK | HQMK | HQMK | HQMK | HQMK |

| **Thermische Ausdehnung [10⁻⁶/K]** | | | | | | |
|---|---|---|---|---|---|---|
| CTE α_{20/300} | | -0,21 | -0,27 | -0,25 | -0,27 | -0,32 |
| CTE α_{20/700} | | 0,17 | 0,11 | 0,15 | 0,14 | 0,09 |

| **Beispiel Nr.** | | **15** | **16** | **17** | | |
|---|---|---|---|---|---|---|
| Glas Nr. | | 10 | 11 | 12 | | |
| Basisglas | | 1 | 1 | 1 | | |

| **Dotierungen (Gew.-%)** | | | | | | |
|---|---|---|---|---|---|---|
| Fe₂O₃ | | 0,062 | 0,062 | 0,061 | | |
| V₂O₅ | | | | | | |
| MoO₃ | | 0,150 | 0,150 | 0,150 | | |
| MnO₂ | | 0,025 | 0,025 | 0,025 | | |
| CoO | | | | 0,020 | | |
| Cr₂O₃ | | 0,020 | | | | |
| Nd₂O₃ | | | | | | |
| NiO | | | 0,027 | | | |
| Zusatz Gemenge | | | | | | |
| **Keramisierung** | # | 1 | 1 | 1 | | |

| **Eigenschaften keramisiert** | | | | | | |
|---|---|---|---|---|---|---|
| **Transmission 4 mm Dicke Normlicht D65,2°** | | | | | | |
| 470 nm | % | 0,3 | 1,6 | 2,0 | | |
| 630 nm | % | 2,6 | 2,1 | 2,0 | | |
| 950 nm | % | 43,5 | 36,6 | 39,7 | | |
| 1600 nm | % | 73,1 | 63,8 | 66,7 | | |
| 3700 nm | % | 51,9 | 50,8 | 50,4 | | |

| **Farbkoordinaten (CIExyY) in Transmission** | | | | | | |
|---|---|---|---|---|---|---|
| x | | 0,475 | 0,341 | 0,315 | | |
| y | | 0,452 | 0,309 | 0,257 | | |
| Helligkeit Y | % | 1,5 | 1,3 | 1,2 | | |
| Farbabstand d | | 0,204 | 0,035 | 0,072 | | |

| **Farbkoordinaten (CIELab) in Remission** | | | | | | |
|---|---|---|---|---|---|---|
| L* | | | | | | |
| a* | | | | | | |
| b* | | | | | | |
| c* | | | | | | |
| ΔE | | | | | | |
| ΔG | % | | | | | |
| **Flachheit Transmission** (Wellenlänge bei Max./Min.) | nm | 7,8 | 2,0 | 2,4 | | |
| | | 630/470 | 630/538 | 630/546 | | |

| **Streuung 4 mm Dicke Normlicht D65,2°** | | | | | | |
|---|---|---|---|---|---|---|
| Visuelle Bewertung | | 1 | 1 | 1 | | |

| **Röntgenbeugung** | | | | | | |
|---|---|---|---|---|---|---|
| Hauptkristallphase | | HQMK | HQMK | HQMK | | |

| **Thermische Ausdehnung [10⁻⁶/K]** | | | | | | |
|---|---|---|---|---|---|---|
| CTE α_{20/300} | | | -0,23 | -0,23 | | |
| CTE α_{20/700} | | | 0,17 | 0,15 | | |

**Tabelle 3: Zusammensetzungen und Eigenschaften kristallisierbarer Gläser und Vergleichsglas Nr. 13**

| **Glas Nr.** | | **13** | **14** | **15** | **16** | **17** |
|---|---|---|---|---|---|---|
| **Zusammensetzung (Gew%)** | | | | | | |
| Li₂O | | 3,83 | 3,71 | 4,03 | 3,31 | 3,82 |
| Na₂O | | 0,57 | 0,46 | 0,42 | 0,37 | 0,60 |
| K₂O | | 0,21 | 0,14 | 0,40 | 0,36 | 0,27 |
| MgO | | 0,19 | 0,98 | 0,77 | 0,56 | 0,30 |
| CaO | | 0,36 | | | 0,58 | 0,43 |
| SrO | | | | | | 0,02 |
| BaO | | 2,41 | | 0,39 | 1,62 | 2,22 |
| ZnO | | 1,41 | 1,58 | 0,56 | 1,92 | 1,52 |
| Al₂O₃ | | 20,2 | 20,9 | 20,1 | 21,4 | 20,9 |
| SiO₂ | | 65,8 | 67,5 | 68,0 | 64,8 | 64,8 |
| TiO₂ | | 3,02 | 2,47 | 4,69 | 3,20 | 4,10 |
| ZrO₂ | | 1,39 | 1,69 | | 1,35 | 0,43 |
| P₂O₅ | | 0,11 | 0,09 | 0,11 | 0,04 | 0,10 |
| SnO₂ | | 0,30 | 0,23 | 0,24 | 0,24 | 0,25 |
| As₂O₃ | | | | | | |
| Fe₂O₃ | | 0,090 | 0,060 | 0,062 | 0,099 | 0,061 |
| V₂O₅ | | 0,016 | | | | |
| MoO₃ | | | 0,150 | 0,140 | 0,160 | 0,150 |
| MnO₂ | | 0,021 | 0,024 | | | 0,024 |
| CoO | | 0,027 | | | | |
| Zusatz Gemenge | | | | | | |

| **Eigenschaften glasig** | | | | | | |
|---|---|---|---|---|---|---|
| Transformationstemperatur T_{g} | °C | | 674 | | 675 | 667 |
| 10² - Temperatur | °C | | 1729 | | 1733 | |
| Verarbeitungstemperatur V_{A} | °C | | 1310 | | 1300 | 1294 |
| OEG-Temperatur | °C | | 1280 | | 1275 | |

| **Glas Nr.** | | **18** | **19** | **20** | **21** | |
|---|---|---|---|---|---|---|
| **Zusammensetzung (Gew%)** | | | | | | |
| Li₂O | | 2,67 | 3,67 | 3,73 | 3,82 | |
| Na₂O | | 0,54 | 0,77 | 0,78 | 0,60 | |
| K₂O | | 0,24 | 0,21 | 0,58 | 0,26 | |
| MgO | | 1,73 | 0,77 | 0,20 | 0,30 | |
| CaO | | 0,69 | 0,21 | 0,21 | 0,43 | |
| SrO | | | | | 0,02 | |
| BaO | | 1,97 | 0,68 | 2,41 | 2,23 | |
| ZnO | | 1,65 | 0,90 | 0,93 | 1,48 | |
| Al₂O₃ | | 20,0 | 22,2 | 20,0 | 21 | |
| SiO₂ | | 64,9 | 65,4 | 66,4 | 64,5 | |
| TiO₂ | | 5,04 | 4,26 | 2,83 | 3,08 | |
| ZrO₂ | | | 0,54 | 1,40 | 1,40 | |
| P₂O₅ | | 0,07 | | | 0,56 | |
| SnO₂ | | 0,24 | 0,19 | 0,39 | 0,23 | |
| As₂O₃ | | | | | | |
| Fe₂O₃ | | 0,091 | 0,085 | 0,033 | 0,062 | |
| V₂O₅ | | | | | | |
| MoO₃ | | 0,099 | 0,079 | 0,045 | 0,040 | |
| MnO₂ | | 0,018 | | | 0,025 | |
| CoO | | | | | | |
| Zusatz Gemenge | | | 0,1 % Zucker ohne Nitrat | 0,2 % Zucker ohne Nitrat | 0,07% S | |

| **Eigenschaften glasig** | | | | | | |
|---|---|---|---|---|---|---|
| Transformationstemperatur T_{g} | °C | 671 | | | 668 | |
| 10² - Temperatur | °C | | | | | |
| Verarbeitungstemperatur V_{A} | °C | 1296 | | | 1299 | |
| OEG-Temperatur | °C | 1265 | | | | |

**Tabelle 4: Eigenschaften erfindungsgemäßer Glaskeramiken und Vergleichsglaskeramik Beispiel 18.**

| **Beispiel Nr.** | | | **18** | **19** | **20** | **21** | **22** |
|---|---|---|---|---|---|---|---|
| | Glas Nr. | | 13 | 14 | 15 | 16 | 16 |
| | Keramisierung | # | 2 | 2 | 1 | 1 | 2 |
| **Eigenschaften keramisiert** | | | | | | | |
| **Transmission 4 mm Dicke Normlicht D65,2°** | | | | | | | |
| | 470 nm | % | 1,9 | 2,5 | 0,8 | 5,8 | 5,2 |

| **Eigenschaften keramisiert** | | | | | | | |
|---|---|---|---|---|---|---|---|
| **Transmission 4 mm Dicke Normlicht D65,2°** | | | | | | | |
| | 630 nm | % | 10,8 | 7,8 | 1,7 | 8,3 | 7,0 |
| | 950 nm | % | 72,0 | 55,4 | 37,6 | 53,4 | 50,9 |
| | 1600 nm | % | 67,5 | 70,8 | 73,5 | 69,1 | 68,1 |
| | 3700 nm | % | 49,4 | 49,9 | 52,4 | 46,3 | 46,4 |

| **Farbkoordinaten (CIExyY) in Transmission** | | | | | | | |
|---|---|---|---|---|---|---|---|
| | x | | 0,476 | 0,414 | 0,393 | 0,344 | 0,338 |
| | y | | 0,322 | 0,359 | 0,350 | 0,325 | 0,320 |
| | Helligkeit Y | % | 3,5 | 4,2 | 1,0 | 5,9 | 5,0 |
| | Farbabstand d | | 0,163 | 0,106 | 0,083 | 0,032 | 0,027 |

| **Farbkoordinaten (CIELab) in Remission** | | | | | | | |
|---|---|---|---|---|---|---|---|
| | L* | | | | | | |
| | a* | | | | | | |
| | b* | | | | | | |
| | c* | | | | | | |
| | ΔE | | | | | | |
| | ΔG | % | | | | | 3,3 |
| | **Flachheit** | nm | 8,0 | 3,1 | 2,3 | 1,6 | 1,6 |
| | **Transmission** (Wellenlänge bei Max./Min.) | | 630 /504 | 630 /470 | 630 /509 | 630 /527 | 630 /536 |

| **Streuung 4 mm Dicke Normlicht D65,2°** | | | | | | | |
|---|---|---|---|---|---|---|---|
| | Visuelle Bewertung | | 1 | 1 | 1 | 1 | 1 |
| | Haze | % | | | | 0,6 | 3,4 |

| **Röntgenbeugung** | | | | | | | |
|---|---|---|---|---|---|---|---|
| | Hauptkristallphase | | HQMK | HQMK | HQMK | HQMK | HQMK |

| **Thermische Ausdehnung [10⁻⁶/K]** | | | | | | | |
|---|---|---|---|---|---|---|---|
| | CTE α_{20/300} | | -0,4 | -0,45 | -0,14 | 0,05 | 0,00 |
| | CTE α_{20/700} | | 0,03 | -0,15 | 0,14 | 0,34 | 0,27 |
| **Beispiel Nr.** | | | **23** | **24** | **25** | **26** | **27** |
| | Glas Nr. | | 17 | 18 | 19 | 20 | 21 |
| | Keramisierung | # | 1 | 1 | 2 | 2 | 1 |

| **Eigenschaften keramisiert** | | | | | | | |
|---|---|---|---|---|---|---|---|
| **Transmission 4 mm Dicke** | | | | | | | |
| | 470 nm | % | 0,9 | 0,7 | 1,9 | 12,5 | 1,8 |
| | 630 nm | % | 0,6 | 1,4 | 2,8 | 10,8 | 0,6 |
| | 950 nm | % | 25,6 | 34,6 | 33,1 | 51,8 | 18,6 |
| | 1600 nm | % | 73,5 | 71,3 | 69,9 | 82,7 | 73,2 |
| | 3700 nm | % | 51,5 | 44,3 | 47,7 | 47,0 | 49,2 |

| **Farbkoordinaten (CIE) in Transmission** | | | | | | | |
|---|---|---|---|---|---|---|---|
| | x | | 0,276 | 0,389 | 0,350 | 0,302 | 0,234 |
| | y | | 0,265 | 0,366 | 0,347 | 0,313 | 0,238 |
| | Helligkeit Y | % | 0,5 | 0,9 | 2,1 | 10,3 | 0,9 |
| | Farbabstand d | | 0,089 | 0,085 | 0,041 | 0,019 | 0,120 |
| | **Flachheit Transmission** (Wellenlänge bei Max./Min.) | nm | 2,1 | 2,1 | 1,5 | 1,3 | 2,9 |
| | | | 470/571 | 630/470 | 630/470 | 470/575 | 470/609 |

| **Streuung 4 mm Dicke Normlicht D65, 2°** | | | | | | | |
|---|---|---|---|---|---|---|---|
| | Visuelle Bewertung | | 1 | 1 | 1 | 1 | 1 |
| | Haze | % | 3,3 | 2,5 | 2,9 | 1,1 | 0,2 |

| **Röntgenbeugung** | | | | | | | |
|---|---|---|---|---|---|---|---|
| | Hauptkristallphase | | HQMK | HQMK | HQMK | HQMK | HQMK |

| **Thermische Ausdehnung [10⁻⁶/K]** | | | | | | | |
|---|---|---|---|---|---|---|---|
| | CTE α_{20/300} | | -0,13 | 1,23 | 0,23 | -0,14 | -0,28 |
| | CTE α_{20/700} | | 0,23 | 1,49 | 0,51 | 0,26 | 0,12 |

**Tabelle 5: Eigenschaften beschichteter, nicht gefärbter Glaskeramiken**

| Beispiel Nr. | B1 | B2 |
|---|---|---|
| Typ | Cermet | Cermet |
| Material | MoSiOx | MoSiOx |
| Mo | 43 | 14 |
| Si | 57 | 86 |
| Farbe | Schwarz | Schwarz |

| Farbort | | |
|---|---|---|
| L* | 29,0 | 27,4 |
| a* | -0,1 | 0,3 |
| b* | 0,8 | 0,1 |
| x | 0,43 | 0,45 |
| y | 0,40 | 0,41 |
| Helligkeit Y | 2,6 | 2,9 |

| Transmission | | |
|---|---|---|
| 470 nm [%] | 1,1 | 1,0 |
| 630 nm [%] | 4,4- | 5,2 |
| 950 nm [%] | 13,8 | 20,1 |
| 1600 nm [%] | 40,5 | 51,4 |
| 3750 nm [%] | 40,2 | 40,9 |
| Haze [%] | 0,3 | 0,3 |
| Flachheit der Transmission | 4,0 | 5,2 |
| | 630/470 | 630/470 |

| Sonstiges | | |
|---|---|---|
| R [MΩ/□] | >20 | >20 |

## Patentansprüche

1. Einrichtungs- oder Ausstattungsgegenstand (1) für eine Küche oder ein Labor umfassend ein Leuchtelement (2) und ein Trennelement (3), wobei das Trennelement (3) zumindest abschnittsweise einen Innenbereich (4) des Gegenstandes (1) von einem Außenbereich (5) abtrennt,
wobei das Leuchtelement (2) im Innenbereich (4) des Gegenstandes (1) so angeordnet ist, dass das von dem Leuchtelement (2) ausgesandte Licht durch das Trennelement (3) hindurchtritt und von einem Benutzer im Außenbereich (5) des Gegenstandes (1) wahrnehmbar ist,
wobei das Trennelement (3) ein Glaskeramiksubstrat umfasst,
wobei das Trennelement (3) im Bereich des Leuchtelements (2) einen Lichttransmissionsgrad von wenigstens 0,1 % und von weniger als 12 % aufweist,
wobei das Trennelement (3) einen Farbort im CIELAB-Farbraum mit den Koordinaten L* von 20 bis 40, a* von -6 bis 6 und b* von -6 bis 6, gemessen in Remission mit Licht der Normlichtart D65 gegen eine Schwarzfalle aufweist,
wobei der Farbort von Licht der Normlichtart D65 sowohl nach Durchtritt durch das Trennelement als auch nach Durchtritt durch das Glaskeramiksubstrat innerhalb eines Weißbereichs W1 liegt, der im Chromatizitätsdiagramm CIExyY-2° durch die folgenden Koordinaten bestimmt ist:
| Weißbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |
und wobei das Glaskeramiksubstrat einen thermischen
Ausdehnungskoeffizienten CTE zwischen 20 und 300 °C von -2,5 bis 2,5 x 10⁻⁶/K aufweist.

2. Einrichtungs- oder Ausstattungsgegenstand (1) nach Anspruch 1,
**dadurch gekennzeichnet, dass**
er keinen Schwarzkörperkompensationsfilter umfasst.

3. Einrichtungs- oder Ausstattungsgegenstand (1) nach Anspruch 1 oder 2,
**dadurch gekennzeichnet, dass**
das Trennelement (3) im Bereich des Leuchtelements (2) einen Lichttransmissionsgrad von wenigstens 2 %, bevorzugt wenigstens 3 % und weniger als 9 %, bevorzugt weniger als 7 %, aufweist.

4. Einrichtungs- oder Ausstattungsgegenstand (1) nach einem der Ansprüche 1 bis 3,
**dadurch gekennzeichnet, dass**
das Trennelement (3) bei einer Wellenlänge von 1600 nm eine Transmission von wenigstens 30 %, vorzugsweise wenigstens 40 %, besonders bevorzugt wenigstens 50 % aufweist und/oder bei wenigstens einer Wellenlänge im Bereich zwischen 900 nm und 1000 nm eine Transmission von wenigstens 3 %, bevorzugt wenigstens 10 %, besonders bevorzugt wenigstens 20% und/oder bei wenigstens einer Wellenlänge im Bereich zwischen 3,25 µm und 4,25 um eine Transmission von wenigstens 10 %, bevorzugt wenigstens 20 %, besonders bevorzugt wenigstens 30% aufweist.

5. Einrichtungs- oder Ausstattungsgegenstand (1) nach einem der vorhergehenden Ansprüche,
**dadurch gekennzeichnet, dass**
das Trennelement (3) einen Farbort im CIELAB-Farbraum mit L* kleiner oder gleich 35, bevorzugt kleiner oder gleich 30, besonders bevorzugt kleiner oder gleich 28 und größer oder gleich 22, bevorzugt größer oder gleich 25, mit a* von -4 bis 4, bevorzugt von -2 bis 2 und mit b* von -4 bis 4, bevorzugt von -2 bis 2, gemessen in Remission, aufweist.

6. Einrichtungs- oder Ausstattungsgegenstand (1) nach einem der vorhergehenden Ansprüche,
**dadurch gekennzeichnet, dass**
das Trennelement eine Beschichtung zur Einstellung des Lichttransmissionsgrades aufweist, wobei die Beschichtung aus einem der folgenden Materialsysteme besteht: Spinelle, Cermets, Carbide, Carbonitride.

7. Einrichtungs- oder Ausstattungsgegenstand (1) nach einem der vorhergehenden Ansprüche,
**dadurch gekennzeichnet, dass**
das Glaskeramiksubstrat des Trennelementes (3) 0,003-0,25 Gew.-% MoO₃ als färbende Komponente und/oder weniger als 0,2 Gew.-% Nd₂O₃ und/oder weniger als 0,015 Gew.-% V₂O₅, bevorzugt kein V₂O₅, enthält.

8. Einrichtungs- oder Ausstattungsgegenstand (1) nach einem der vorhergehenden Ansprüche,
**dadurch gekennzeichnet, dass**
zwischen einem prozentualen Grauwert G₁, der dem gemessenen Grauwert einer Farbkarte der RAL-Farbe 9017 in Durchsicht durch das Trennelement (3) entspricht, und einem prozentualen Grauwert G₂, der dem gemessenen Grauwert einer Farbkarte der RAL-Farbe 9003 in Durchsicht durch das Trennelement (3) entspricht, ein Unterschied IG₁-G₂I von weniger als 5,0 %, bevorzugt von weniger als 3,5%, besonders bevorzugt von weniger als 2,5 % und ganz besonders bevorzugt von weniger als 1,5 % besteht.

9. Einrichtungs- oder Ausstattungsgegenstand (1) nach einem der vorhergehenden Ansprüche,
**dadurch gekennzeichnet, dass**
das Trennelement (3) einen Haze von höchstens 5 %, bevorzugt höchstens 2 %, besonders bevorzugt höchstens 1 % und/oder eine Clarity von mindestens 90 %, bevorzugt mindestens 95 %, ganz besonders bevorzugt mindestens 98% aufweist.

10. Einrichtungs- oder Ausstattungsgegenstand (1) nach einem der vorhergehenden Ansprüche,
**dadurch gekennzeichnet, dass**
das Leuchtelement (2) im sichtbaren Spektralbereich wenigstens zwei Intensitätsmaxima aufweist und/oder eine LEDs und/oder als Siebensegmentanzeige ausgeführt ist.

11. Einrichtungs- oder Ausstattungsgegenstand (1) nach einem der vorhergehenden Ansprüche,
**dadurch gekennzeichnet, dass**
der Gegenstand (1) ein Tisch, insbesondere ein Kochtisch oder ein Labortisch, ein Küchenschrank, ein Küchengerät, insbesondere ein Kochgerät, ein Backofen, ein Mikrowellengerät, ein Kühlschrank, ein Grill, Dampfgarer, Toaster oder eine Abzugshaube ist.

12. Einrichtungs- oder Ausstattungsgegenstand (1) nach einem der vorhergehenden Ansprüche,
**dadurch gekennzeichnet, dass**
das Trennelement (3) eine Tischplatte, insbesondere eine Kochtischplatte oder eine Labortischplatte, eine Küchenarbeitsplatte, ein Kochfeld oder eine Backofentür, eine Mikrowellentür, ein Teil des Korpus eines Möbels, ein Teil der Front einer Tür oder einer Schublade ist.

## Claims

1. Fitout article or article of equipment (1) for a kitchen or laboratory, comprising a lighting element (2) and a separating element (3),
wherein the separating element (3) divides at least sections of an interior (4) of the article (1) from an exterior (5),
wherein the lighting element (2) is disposed in the interior (4) of the article (1) such that the light emitted by the lighting element (2) passes through the separating element (3) and is perceptible by a user in the exterior (5) of the article (1),
wherein the separating element (3) comprises a glass ceramic substrate,
wherein the separating element (3) in the region of the lighting element (2) has a light transmittance of at least 0.1% and of less than 120,
wherein the separating element (3) has a colour locus in the CIELAB colour space with the coordinates L* of 20 to 40, a* of -6 to 6 and b* of -6 to 6, measured in reflectance with D65 standard illuminant light against a black trap,
wherein the colour locus of D65 standard illuminant light, both after passing through the separating element (3) and after passing through the glass ceramic substrate, is within a white region W1 determined in the chromaticity diagram CIExyY-2° by the following coordinates:
| White region W1 | |
|---|---|
| x | y |
| 0.27 | 0.21 |
| 0.22 | 0.25 |
| 0.32 | 0.37 |
| 0.45 | 0.45 |
| 0.47 | 0.34 |
| 0.36 | 0.29 |
and wherein the glass ceramic substrate has a coefficient of thermal expansion CTE between 20 and 300°C of -2.5 to 2.5 x 10⁻⁶/K.

2. Fitout article or article of equipment (1) according to Claim 1, **characterized in that** it does not comprise a black-body compensation filter.

3. Fitout article or article of equipment (1) according to Claim 1 or 2, **characterized in that** the separating element (3) in the region of the lighting element (2) has a light transmittance of at least 20, preferably at least 30, and less than 90, preferably less than 7%.

4. Fitout article or article of equipment (1) according to either of Claims 1 to 3,
**characterized in that**
the separating element (3) has a transmission at a wavelength of 1600 nm of at least 30%, preferably at least 40%, more preferably at least 50%, and/or a transmission at at least one wavelength in the range between 900 nm and 1000 nm of at least 3%, preferably at least 10%, more preferably at least 20%, and/or a transmission at at least one wavelength in the range between 3.25 µm and 4.25 µm of at least 10%, preferably at least 20%, more preferably at least 30%.

5. Fitout article or article of equipment (1) according to any of the preceding claims, **characterized in that**
the separating element (3) has a colour locus in the CIELAB colour space with L* not more than 35, preferably not more than 30, more preferably not more than 28 and not less than 22, preferably not less than 25, with a* of -4 to 4, preferably of -2 to 2, and with b* of -4 to 4, preferably of -2 to 2, measured in reflectance.

6. Fitout article or article of equipment (1) according to any of the preceding claims, **characterized in that**
the separating element includes a coating for adjustment of the light transmittance, wherein the coating consists of one of the following material systems: spinels, cermets, carbides, carbonitrides.

7. Fitout article or article of equipment (1) according to any of the preceding claims, **characterized in that**
the glass ceramic substrate of the separating element (3) contains 0.003-0.25% by weight of MoO₃ as colouring component and/or less than 0.2% by weight of Nd₂O₃ and/or less than 0.015% by weight of V₂O₅, preferably no V₂O₅.

8. Fitout article or article of equipment (1) according to any of the preceding claims, **characterized in that**
there is a difference |G1-G2| between a percentage grey value G1 that corresponds to the measured grey value of a colour card of RAL colour 9017 viewed through the separating element (3) and a percentage grey value G2 corresponding to the measured grey value of a colour card of RAL colour 9003 viewed through the separating element (3) of less than 5.0%, preferably of less than 3.5%, more preferably of less than 2.5% and most preferably of less than 1.5%.

9. Fitout article or article of equipment (1) according to any of the preceding claims, **characterized in that**
the separating element (3) has a haze of at most 50, preferably at most 2%, more preferably at most 1%, and/or a clarity of at least 90%, preferably at least 95%, most preferably at least 98%.

10. Fitout article or article of equipment (1) according to any of the preceding claims, **characterized in that**
the lighting element (2) has at least two intensity maxima in the visible spectral region and/or is an LED and/or executed as a seven-segment display.

11. Fitout article or article of equipment (1) according to any of the preceding claims, **characterized in that**
the article (1) is a table, especially a cooking table or a laboratory table, a kitchen cabinet, a kitchen appliance, especially a cooking appliance, a baking oven, a microwave device, a refrigerator, a grill, steam cooker, toaster or an extractor hood.

12. Fitout article or article of equipment (1) according to any of the preceding claims, **characterized in that**
the separating element (3) is a table surface, especially a cooking table surface or a laboratory table surface, a kitchen working surface, a cooktop or a baking oven door, a microwave oven door, part of the body of an item of furniture, part of the front of a door or of a drawer.

## Revendications

1. Objet d'ameublement ou d'équipement (1) destiné à une cuisine ou un laboratoire, ledit objet comprenant un élément éclairant (2) et un élément de séparation (3), l'élément de séparation (3) séparant au moins par portions une zone intérieure (4) de l'objet (1) d'une zone extérieure (5),
l'élément éclairant (2) étant disposé dans la zone intérieure (4) de l'objet (1) de sorte que la lumière émise par l'élément éclairant (2) traverse l'élément de séparation (3) et puisse être perçue par un utilisateur dans la zone extérieure (5) de l'objet (1),
l'élément de séparation (3) comprenant un substrat en vitrocéramique,
l'élément de séparation (3) ayant dans la zone de l'élément éclairant (2) une transmission lumineuse d'au moins 0,1 % et de moins de 12 %,
l'élément de séparation (3) ayant dans l'espace colorimétrique CIELAB une localisation chromatique dont les coordonnées L* vont de 20 à 40, a* de -6 à 6 et b* de -6 à 6, mesurées en rémission avec la lumière du type éclairage normalisé D65 vers un piège noir,
la localisation chromatique de la lumière du type éclairage normalisé D65, tant après passage dans l'élément de séparation (3) qu'après passage dans le substrat en vitrocéramique étant située dans une zone blanche W1 qui est déterminée dans le diagramme de chromaticité CIExyY-2° par les coordonnées suivantes :
| Zone blanche W1 | |
|---|---|
| X | y |
| 0.27 | 0.21 |
| 0.22 | 0.25 |
| 0.32 | 0.37 |
| 0.45 | 0.45 |
| 0.47 | 0.34 |
| 0.36 | 0.29 |
et le substrat en vitrocéramique ayant un coefficient de dilatation thermique CTE entre 20 et 300 °C de -2,5 à 2,5 x 10⁻⁶/K.

2. Objet d'ameublement ou d'équipement (1) selon la revendication 1, **caractérisé en ce qu'**il ne comprenant pas de filtre de compensation de corps noir

3. Objet d'ameublement ou d'équipement (1) selon la revendication 1 ou 2, **caractérisé en ce que**
l'élément de séparation (3) a dans la zone de l'élément éclairant (2) une transmission lumineuse d'au moins 2 %, de préférence d'au moins 3 % et de moins de 9 %, de préférence de moins de 7 %.

4. Objet d'ameublement ou d'équipement (1) selon l'une des revendications 1 à 3, **caractérisé en ce que**
l'élément de séparation (3) a une transmission d'au moins 30 %, de préférence d'au moins 40 %, de manière particulièrement préférée d'au moins 50 % à une longueur d'onde de 1600 nm et/ou une transmission d'au moins 3 %, de préférence d'au moins 10 %, de manière particulièrement préférée d'au moins 20 % à au moins une longueur d'onde dans la plage comprise entre 900 nm et 1000 nm et/ou une transmission d'au moins 10 %, de préférence d'au moins 20 %, de manière particulièrement préférée d'au moins 30 % à au moins une longueur d'onde dans la plage comprise entre 3,25 µm et 4,25 µm.

5. Objet d'ameublement ou d'équipement (1) selon l'une des revendications précédentes, **caractérisé en ce que**
l'élément de séparation (3) a une localisation chromatique dans l'espace colorimétrique CIELAB avec L* inférieur ou égal à 35, de préférence inférieur ou égal à 30, de manière particulièrement préférée inférieur ou égal à 28 et supérieur ou égal à 22, de préférence supérieur ou égal à 25, avec a* de -4 à 4, de préférence de -2 à 2 et avec b* de -4 à 4, de préférence de -2 à 2, mesurés en rémission.

6. Objet d'ameublement ou d'équipement (1) selon l'une des revendications précédentes, **caractérisé en ce que**
l'élément de séparation comporte un revêtement destiné à régler la transmission lumineuse, le revêtement comprenant un des systèmes de matériaux suivants : spinelles, cermets, carbures, carbonitrures.

7. Objet d'ameublement ou d'équipement (1) selon l'une des revendications précédentes, **caractérisé en ce que**
le substrat en vitrocéramique de l'élément de séparation (3) contient de 0,003 à 0,25 % en poids de MoO₃ comme composant colorant et/ou moins de 0,2 % en poids de Nd₂O₃ et/ou moins de 0,015 % en poids de V2O5, de préférence ne contient aucun V2O5.

8. Objet d'ameublement ou d'équipement (1) selon l'une des revendications précédentes, **caractérisé en ce que**
entre une valeur de gris en pourcentage G1, qui correspond à la valeur de gris mesurée d'une carte de couleur RAL 9017 vue à travers l'élément de séparation (3), et une valeur de gris en pourcentage G2, qui correspond à la valeur de gris mesurée d'une carte de couleur RAL 9003 vue à travers l'élément de séparation (3), il existe une différence |G1-G2| de moins de 5,0 %, de préférence de moins de 3,5 %, de manière particulièrement préférée de moins de 2,5 % et de manière tout particulièrement préférée de moins de 1,5 %.

9. Objet d'ameublement ou d'équipement (1) selon l'une des revendications précédentes, **caractérisé en ce que**
l'élément de séparation (3) présente un trouble d'au plus 5 %, de préférence d'au plus 2 %, de manière particulièrement préférée d'au plus 1 % et/ou une limpidité d'au moins 90 %, de préférence d'au moins 95 %, de manière tout particulièrement préférée d'au moins 98 %.

10. Objet d'ameublement ou d'équipement (1) selon l'une des revendications précédentes, **caractérisé en ce que**
l'élément éclairant (2) comporte au moins deux maxima d'intensité dans le domaine spectral visible et/ou est conçu comme un affichage à LED et/ou à sept segments.

11. Objet d'ameublement ou d'équipement (1) selon l'une des revendications précédentes, **caractérisé en ce que**
l'objet (1) est une table, notamment une table de cuisson ou une table de laboratoire, un meuble de cuisine, un appareil de cuisine, notamment un appareil de cuisson, un four, un appareil à micro-ondes, un réfrigérateur, un grill, un cuiseur vapeur, un grillepain ou une hotte.

12. Objet d'ameublement ou d'équipement (1) selon l'une des revendications précédentes, **caractérisé en ce que**
l'élément de séparation (3) est un plateau de table, notamment un plateau de table de cuisson ou un plateau de table de laboratoire, un plan de travail de cuisine, une plaque de cuisson ou une porte de four, une porte de micro-ondes, une partie du corps d'un meuble, une partie du devant d'une porte ou d'un tiroir.
